# EUROPEAN PATENT SPECIFICATION

(11) **EP 4 489 350 B1**
(45) Date of publication and mention of the grant of the patent: **21.01.2026**
(21) Application number: 24184706.0
(22) Date of filing: 26.06.2024
(51) Int. Cl.: H04L 12/18

(54) **CONFERENCE SYSTEM, PARTICIPATION METHOD, AND CARRIER MEDIUM**
KONFERENZSYSTEM, TEILNAHMEVERFAHREN UND TRÄGERMEDIUM
SYSTÈME DE CONFÉRENCE, PROCÉDÉ DE PARTICIPATION ET SUPPORT DE TRANSPORT

(30) Priority: 06.07.2023 JP 2023111584
(43) Date of publication of application: 08.01.2025
(73) Proprietor: Ricoh Company, Ltd., Tokyo 143-8555 (JP)
(72) Inventor: NAKAMURA, Daiki, Tokyo, 143-8555 (JP)
(74) Representative: SSM Sandmair

(56) References cited:
- US-A1- 2013 191 896

## Description

### BACKGROUND

### Technical Field

The present disclosure relates to a conference system, a participation method, and a carrier medium.

### Related Art

At an online conference, a plurality of terminal devices are connected to an information processing system via a network, and users of the terminal devices log in to the online conference to participate in the same online conference. A conference terminal device such as an electronic whiteboard can also participate in the online conference. When the user inputs a password to the conference terminal device to log in, the terminal devices participating in the conference can share handwritten data and screen data displayed by the conference terminal device.

According to the technique described in Japanese Unexamined Patent Application Publication No. 2020-194371, a user logs in to a conference from an electronic whiteboard by holding an integrated circuit (IC) card over the electronic whiteboard to participate in the conference.

However, in such a technique, it is necessary to prepare the IC card, and it is necessary for the user to hold the IC card over the conference terminal device in order to cause the conference terminal device to participate in the conference. Since the user needs to move at least to the area near the conference terminal device, take out the IC card, and hold the IC card over the conference terminal device, it takes time and effort to cause the conference terminal device to participate in the conference. Another prior art example of a method and a system allowing a user terminal to participate to an on-line conference is disclosed in US2013/191896.

### SUMMARY

The invention consists of a conference system and of a participation method executed by the conference system such as claimed in appended indpendent claims 1 and 13 respectively.

Other advantageous optional features are included in the appended dependent claims.

With the claimed configuration, the conference terminal device can easily participate in the conference.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIGS. 1A and 1B are diagrams illustrating an example of a conference list screen and a conference detail screen displayed on a terminal device or an electronic whiteboard;
FIG. 2 is a diagram illustrating an example of a password input screen;
FIG. 3 is a sequence diagram illustrating a processing flow of a login method using a password;
FIG. 4 is a diagram illustrating a configuration of a conference system;
FIG. 5 is a diagram illustrating an example a hardware configuration of an electronic whiteboard;
FIG. 6 is a diagram illustrating an example of a hardware configuration of each of a conference server and a terminal device;
FIG. 7 is a functional block diagram illustrating an example of the conference server, the terminal device, and the electronic whiteboard in the conference system;
FIGS. 8A and 8B are diagrams illustrating an example of conference information and a participation state;
FIG. 9 is a sequence diagram illustrating a processing flow in which a user of a terminal device and an electronic whiteboard participate in and exit from a conference;
FIG. 10 is a diagram illustrating the transition in a conference participation state;
FIG. 11 is a diagram illustrating a participation code displayed on the electronic whiteboard;
FIG. 12 is a sequence diagram illustrating a processing flow in which a user operates a terminal device and the terminal device transmits a participation request to a conference server;
FIG. 13 is a flowchart of a process in which the conference server controls the screen of the terminal device in accordance with a guest user and the conference participation state;
FIG. 14 is a diagram illustrating an example of a conference detail screen displayed in step S104 of FIG. 13;
FIG. 15 is a diagram illustrating an example of a conference detail screen displayed in step S105 of FIG. 13 when the conference participation state is offline or participating in a conference;
FIG. 16 is a diagram illustrating an example of a conference detail screen displayed by a terminal device operated by a guest user in step S105 of FIG. 13;
FIG. 17 is a diagram illustrating an example of a participant list screen that a user displays on the terminal device;
FIG. 18 is a diagram illustrating an example of a participant list screen after a user has pressed a participation button;
FIG. 19 is a diagram illustrating an example of a participant list screen that a guest user displays on a terminal device;
FIG. 20 is a diagram illustrating another example of a participant list screen that a user displays on the terminal device;
FIG. 21 is a diagram illustrating an example of a participation code input screen displayed by a terminal device;
FIG. 22 is a diagram illustrating an example of a participation request failure screen displayed by a terminal device in step S36 of FIG. 12;
FIG. 23 is a sequence diagram illustrating a processing flow in which a user operates a terminal device to cancel a request for participation of an electronic whiteboard;
FIG. 24 is a diagram illustrating an example of a conference participation screen displayed on the electronic whiteboard which has received a participation request in step S37 in FIG. 12;
FIG. 25 is a diagram illustrating an example of a first exit request screen displayed by a terminal device;
FIG. 26 is a diagram illustrating an example of a second exit request screen displayed on a terminal device operated by a guest user;
FIG. 27 is a diagram illustrating an example of a participant list screen (at the time of exit from the conference) displayed by any of users on a terminal device;
FIG. 28 is a diagram illustrating an example of a participant list screen (at the time of exit from the conference) after a user has pressed an exit button;
FIG. 29 is a diagram illustrating an example of a participant list screen (at the time of exit from the conference) displayed by a guest user on a terminal device; and
FIG. 30 is a diagram illustrating an example of a conference exit screen displayed on an electronic whiteboard which has received an exit request in step S24 of FIG. 9.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

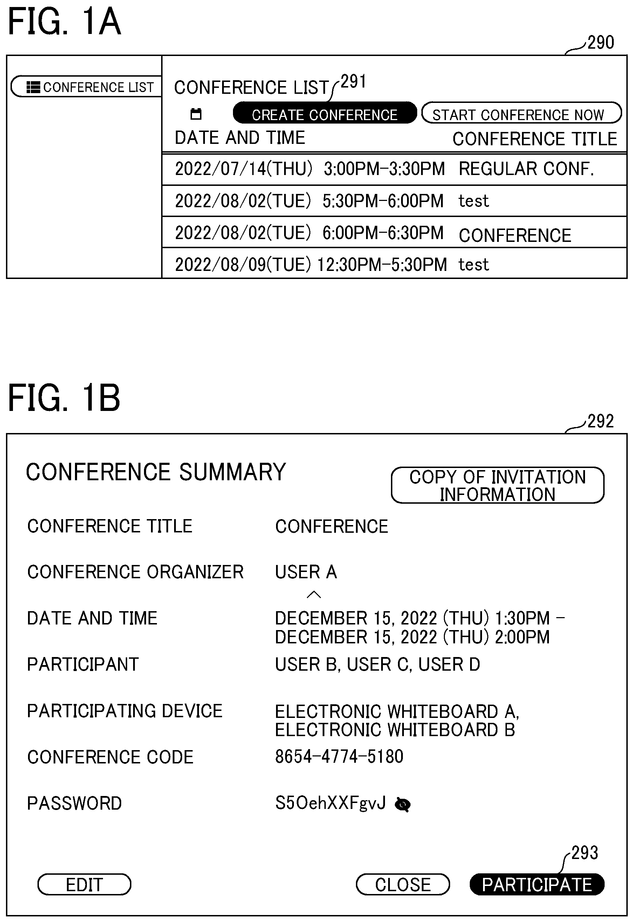

Referring to FIGS. 1 to 3, a description is given below of a conference system and a participation method performed by the conventional conference system.

Before a conference is held, a participant of the conference sets conference information in a conference server 1A. The conference information includes, for example, a conference name of the conference, a start time of the conference, the participants of the conference, devices (e.g., electronic whiteboard) that participate in the conference, and a password.

FIG. 1A is diagram illustrating an example of a conference list screen 290 displayed on a terminal device 4A or an electronic whiteboard 2A. A conference creation button 291 is displayed on the conference list screen 290. When the participant presses the conference creation button 291, a conference detail screen 292 as illustrated in FIG. 1B is displayed. FIG. 1B is a diagram illustrating an example of the conference detail screen 292 displayed on the terminal device or the electronic whiteboard. The participant can set the conference information from the conference detail screen 292.

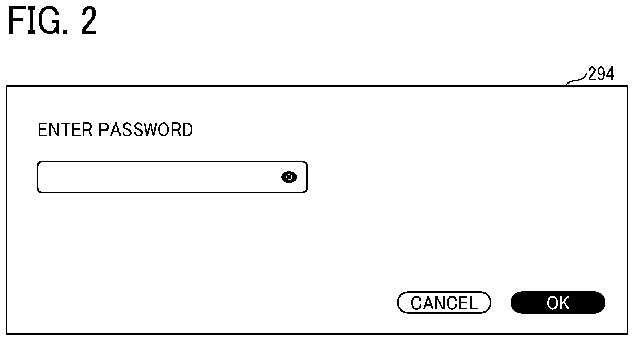

For example, when the participant presses a participation button 293 on the conference detail screen 292 of FIG. 1B displayed on the electronic whiteboard 4A, the password input screen 294 as illustrated in FIG. 2 is displayed. When the participant inputs a correct password, the electronic whiteboard 4A is allowed to participate in the conference.

Even if the electronic whiteboard 2A is not registered as a participant device in the conference in the conference information, the electronic whiteboard 2Ais allowed to participate in the conference when the combination of the conference code and the password input by the user to the electronic whiteboard 2 is correct.

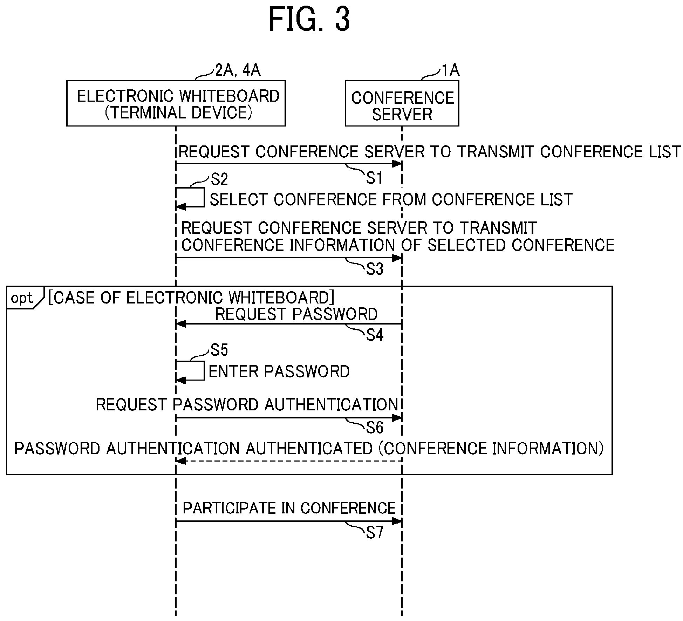

FIG. 3 is a sequence diagram illustrating a processing flow of a login method using a password.

In step S1, the terminal device 4A or the electronic whiteboard 2A requests the conference server 1 to transmit a conference list. In this case, it is assumed that the user of the terminal device 4A or the electronic whiteboard 2A has logged in. The conference server 1 searches for conference information including the user of the terminal device 4A as a participant or the electronic whiteboard 2A is as a participant device, and returns a list of the conference information to the terminal device 4A or the electronic whiteboard 2A.

In step S2, the participant selects a conference from the conference list screen 290.

In step S3, the terminal device 4A or the electronic whiteboard 2A requests the conference server 1 to transmit the conference information of the conference selected in step S2.

In step S4, in a case where the electronic whiteboard 2A requests the conference information, the electronic whiteboard 2Ahas not logged in to the conference server 1, and thus the conference server 1 requests a password from the electronic whiteboard 2A.

In step S5, the electronic whiteboard 2A displays the password input screen 294 of FIG. 2, and the participant inputs a password.

In step S6, the electronic whiteboard 2A transmits the password and an authentication request to the conference server 1. The conference code may also be transmitted to the conference server 1, though the conference code is known to the conference server 1. The conference server 1 transmits the conference information to the electronic whiteboard 2A when the password is correct.

In step S7, the electronic whiteboard 2A is allowed to access the uniform resource locator (URL) of the conference room of the conference included in the transmitted conference information.

As described above, the user generally needs to input a password in order for the electronic whiteboard 2A to log in to the conference. Although there is a method in which the user logs in to the conference with an IC card instead of inputting a password, the user needs to prepare the IC card, which leads to an increase in cost. The user also needs to carry the IC card.

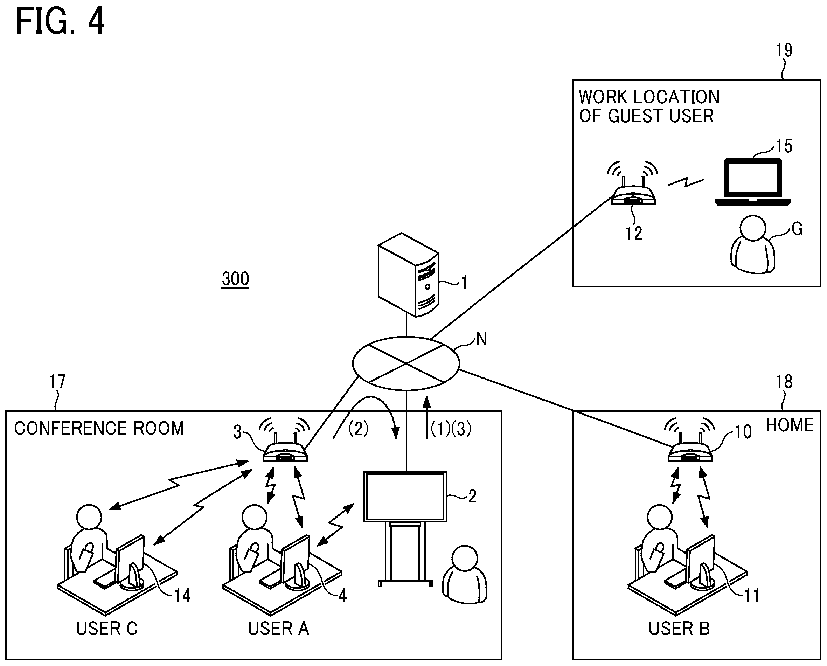

In the present embodiment, an electronic whiteboard 2 can automatically participate in the conference in response to a participation request from a terminal device 4 without the participant inputting a password to the electronic whiteboard 2. A description is given below of an outline of a method for participating in the conference according to the present embodiment with reference to FIG. 4.

FIG. 4 is a diagram illustrating a configuration of a conference system 300. Details of the configuration of the conference system 300 are described later. In step (1), the electronic whiteboard 2 notifies a conference server 1 of the conference participation state (described later) when the electronic whiteboard 2 boots up. In step (2), a conference application running on the terminal device 4 transmits the participation request to a participant device (electronic whiteboard 2) of the conference via the conference server 1 in response to an operation of the participant. In step (3), when the electronic whiteboard 2 receives the participation request from the participant of the conference, the electronic whiteboard 2 skips inputting the password and participates in the conference.

As described above, the electronic whiteboard according to the present embodiment can log in (participate) in a conference in response to a participation request from a participant (conference application of a terminal device) of the conference, and thus the participant does not need to input a password to the electronic whiteboard.

In this disclosure, the "conference" is a conference in which persons concerned give opinions about a subject and consult with each other in accordance with a predetermined procedure. The conference may be face-to-face or online. The "conference" may be referred to as a meeting, a gathering, a consultation, a discussion, a negotiation, and an interview.

The "conference terminal device" or "terminal device" is an electronic device mainly used in a conference. In the present embodiment, the electronic whiteboard is described as an example of the conference terminal device. The conference terminal device may be a projector or a microphone speaker for conference. The "electronic whiteboard" is a device that displays handwritten characters and figures on a display in real time using a touch screen. The electronic whiteboard may have a function of connecting to a network and a function of formatting handwritten characters and figures.

A "presence" is information indicating that the device, such as the electronic whiteboard 2, is present. For example, the presence is the conference participation state indicating whether the terminal device is in a state of being ready to participate in a conference. The conference participation state is an offline state, an online state, or a conference participating state.

The "user" is a person who uses the terminal device or the electronic whiteboard. The users include participants who participate in the conference. The participant is a person who participates in the conference or a person who has participated in the conference among the users.

The "participation in the conference" indicates participating in the conference as a member. In an online conference, the participation in the conference indicates that the terminal device is connected to the conference room of a conference and the terminal device is in a state where audio and images can be shared. The exit indicates that the user is no longer a member of the conference. In the online conference, the exit is a state that the terminal device is disconnected from the conference room and cannot share the audio and images.

The "participation request" is a request for a participant of the conference to cause a participant device registered in the conference information to participate in the conference. The "exit request" is a request to cause a participant device participating in the conference to exit from the conference.

A description is given below of the system configuration of the conference system 300 with reference to FIG. 4. In the conference system 300, the conference server 1, a Wi-Fi^{®} router 3 in a conference room 17, a Wi-Fi router 10 in a home 18, and the electronic whiteboard 2 in the conference room 17 are connected to each other to communicate with each other via a network N. The terminal devices 4 and 14 are connected to the Wi-Fi router 3 and a terminal device 11 are connected to the Wi-Fi router 10, and thus the terminal devices 4, 11, and 14 communicate with each other via the network N. The network N is, for example, the Internet, but may be an on-premises network such as a corporate network.

The conference server 1 is an example of an information processing system including one or more information processing apparatuses. The conference server 1 manages conference information, and also manages the start and end of a conference and the login of participants. A service provided by the conference application executed by the conference server 1 is referred to as a conference service.

The electronic whiteboard 2 and the Wi-Fi router 3 are installed in the conference room 17, and a user A enters the conference room 17 with the terminal device 4. The electronic whiteboard 2 and the Wi-Fi router 3 are connected to the network N. The terminal device 4 communicates with the Wi-Fi router 3 via a wireless local area network (LAN). The terminal device 4 and the electronic whiteboard 2 are connected to each other via Bluetooth^{®} or the wireless LAN.

A user C enters the conference room 17 with the terminal device 14. The terminal device 14 communicates with the Wi-Fi router 3 via the wireless LAN. The terminal device 14 and the electronic whiteboard 2 are connected to each other via the Bluetooth^{®} or the wireless LAN.

Each of the electronic whiteboard 2 and the terminal devices 4 and 14 in the conference room 17 executes the conference application. The conference application may be a native application or a web application.

On the other hand, a user B participates in the conference from the user B's home 18. The Wi-Fi router 10 is installed in the home 18. The user B uses the terminal device 11. The Wi-Fi router 10 installed in the home 18 of the user B is communicably connected to the network N.

The terminal device 11 of the user B communicates with the Wi-Fi router 10 via the wireless LAN. The terminal device 11 of the user B executes the conference application.

The terminal devices 4, 11, and 14 are examples of a device operated by each participant of the conference. The terminal devices 4, 11, and 14 may be an information processing device that has a communication function and on which the conference application executes, such as a personal computer (PC), a tablet terminal, a smartphone, or a personal digital assistant (PDA).

In the configuration as illustrated in FIG. 4, handwritten data that is handwritten by the electronic whiteboard 2 and any of the terminal devices 4, 11, and 14 is transmitted to the conference server 1, and the conference server 1 distributes the handwritten data to the participating electronic whiteboard 2 and the terminal devices 4, 11, and 14 (not including the device that transmitted the handwritten data to the conference server 1) to share the handwritten data.

For screen data such as video, the electronic whiteboard 2 and any of the terminal devices 4, 11, and 14 distribute the screen data to the conference server 1, and the conference server 1 distributes the screen data to the participating electronic whiteboard 2 and the terminal devices 4, 11, and 14 (not including the device that transmitted the screen data to the conference server 1) to share the screen. Since the screen data is video, the screen in the latest state is constantly shared by other terminal devices.

There is a case where a guest user G participates in the conference. The guest user G participates in the conference from a workplace 19 of the guest user G. A Wi-Fi router 12 is installed in the workplace 19 of the guest user G. The guest user G uses a terminal device 15. The Wi-Fi router 12 at the workplace 19 of the guest user G is communicably connected to the network N. The terminal device 15 of the guest user G communicates with the Wi-Fi router 12 via the wireless LAN. The terminal device 15 of the guest user G executes the conference application.

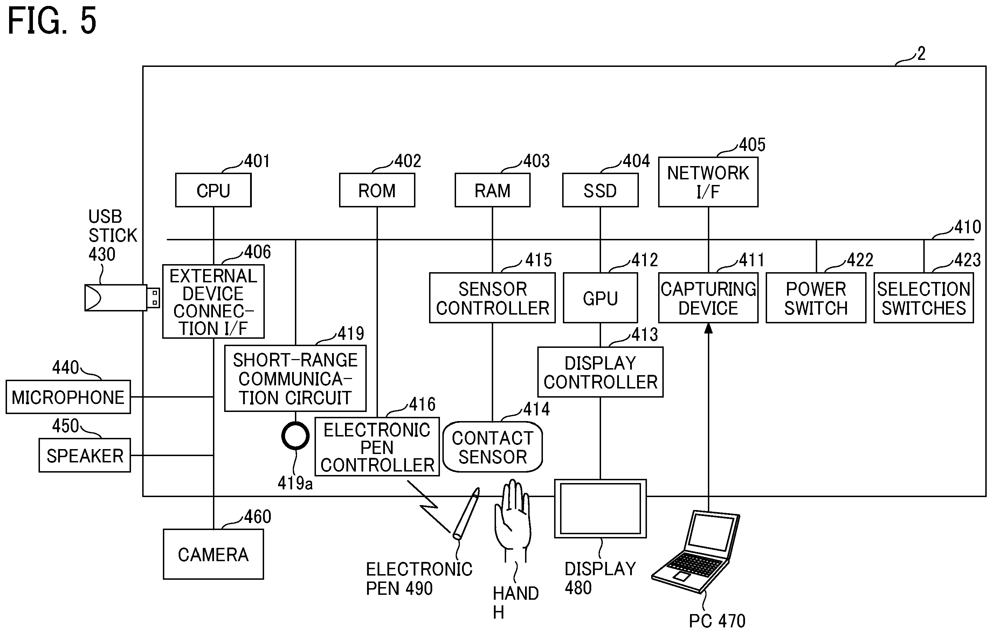

FIG. 5 is a diagram illustrating a hardware configuration of the electronic whiteboard 2. As illustrated in FIG. 5, the electronic whiteboard 2 includes a central processing unit (CPU) 401, a read-only memory (ROM) 402, a random-access memory (RAM) 403, a solid-state drive (SSD) 404, a network interface (I/F) 405, and an external device connection I/F 406.

The CPU 401 controls the overall operation of the electronic whiteboard 2. The ROM 402 stores programs such as an initial program loader (IPL) to activate an operation system (OS). The RAM 403 is used as a work area for the CPU 401. The SSD 404 stores various data such as a program for the electronic whiteboard 2. The network I/F 405 controls communication with a communication network such as the network N. The external device connection I/F 406 is an interface that connects the electronic whiteboard 2 to various external devices. Examples of the external devices include, but not limited to, a universal serial bus (USB) memory 430, a microphone 440, a speaker 450, and a camera 460.

The electronic whiteboard 2 further includes a capture device 411, a graphics processing unit (GPU) 412, a display controller 413, a contact sensor 414, a sensor controller 415, an electronic pen controller 416, a short-range communication circuit 419, and an antenna 419a for the short-range communication circuit 419, a power switch 422, and selection switches 423.

The capture device 411 displays a still image or a moving image based on image data based on image data of an external PC 470. The GPU 412 is a semiconductor chip dedicated to the processing of a graphical image. The display controller 413 controls a screen display to output images from the GPU 412 to a display 480. The contact sensor 414 detects a touch onto the display 480 with an electronic pen 490 or a user's hand H. The sensor controller 415 controls the operation of the contact sensor 414. The contact sensor 414 performs input of coordinates and detection of coordinates using an infrared blocking type. More specifically, the display 480 is provided with two opto-electronic devices disposed on both upper ends of the display 480, and a reflector frame surrounding the sides of the display 480. The opto-electronic devices emit a plurality of infrared rays parallel to a surface of the display 480. The opto-electronic devices receive lights passing in the same direction as an optical path of the emitted infrared rays, which are reflected by the reflector frame. The opto-electronic devices which is the contact sensor 414 outputs a position (position on the light receiving element) where the infrared light is blocked by the object to the sensor controller 415, and the sensor controller 415 specifies a coordinate position which is a contact position of the object from the two pieces of position information. The electronic pen controller 416 communicates with the electronic pen 490 via Bluetooth^{®} to detect contact by the tip or bottom of the electronic pen with the display 480. The short-range communication circuit 419 is a communication circuit that communicates in compliance with near field communication (NFC) and Bluetooth^{®}. The power switch 422 turns on or off the power of the electronic whiteboard 2. The selection switches 423 are, for example, a group of switches for adjusting the brightness or hue of display on the display 480.

The electronic whiteboard 2 further includes a bus line 410. Examples of the bus line 410 include, but are not limited to, an address bus and a data bus, which electrically connects the elements such as the CPU 401 illustrated in FIG. 5 with each other.

The contact sensor 414 is not limited to the infrared blocking type, and may be a different type of detector, such as a capacitance touch panel that specifies a contact position by detecting a change in capacitance. The contact sensor 414 may be a resistance film touch panel that specifies a contact position by detecting a change in voltage between two opposed resistance films. The contact sensor 414 may use an electromagnetic induction touch panel that specifies a contact position by detecting the electromagnetic induction caused by contact of an object with a display. The contact sensor 414 may use various other detection methods. In addition to or in alternative to detecting a touch by the tip or bottom of the electronic pen 490, the electronic pen controller 416 may also detect a touch by another part of the electronic pen 490, such as a part held by a hand of the user.

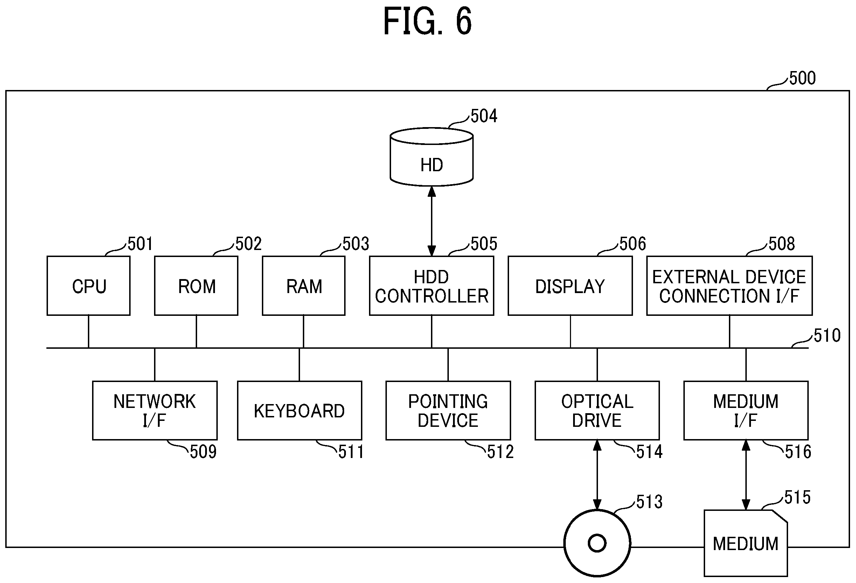

FIG. 6 is a diagram illustrating an example of a hardware configuration of the conference server 1 and the terminal devices 4, 11, and 14. As illustrated in FIG. 6, the conference server 1 and the terminal devices 4, 11, and 14 each are implemented by a computer 500. The computer includes a CPU 501, a ROM 502, a RAM 503, a hard disk (HD) 504, a hard disk drive (HDD) controller 505, a display 506, an external device connection I/F 508, a network I/F 509, a bus line 510, a keyboard 511, a pointing device 512, an optical drive 514, and a medium I/F 516.

The CPU 501 controls the overall operations of the conference server 1 and the terminal devices 4, 11, and 14. The ROM 502 stores programs such as an IPL to boot the CPU 501. The RAM 503 is used as a work area for the CPU 501. The HD 504 stores various data such as a program. The HDD controller 505 controls the reading and writing of various data from and to the HD 504 under the control of the CPU 501. The display 506 displays various information such as a cursor, menu, window, characters, or image. The external device connection I/F 508 is an interface for connecting the computer 500 to various external devices. Examples of the external devices include, but not limited to, a USB memory and a printer. The network I/F 509 is an interface for performing data communication using a network. Examples of the bus line 510 include, but are not limited to, an address bus and a data bus, which electrically connects the elements such as the CPU 501 illustrated in FIG. 6 with each other.

The keyboard 511 is an example of an input device (input means) including a plurality of keys used to input characters, numerals, or various instructions, for example. The pointing device 512 is an example of an input device (input means) that allows a user to select or execute various instructions, select an item to be processed, or move a cursor being displayed. The optical drive 514 controls the reading or writing of various data with respect to an optical storage medium 513, which is an example of a removable storage medium. Examples of the optical storage medium 513 include, but are not limited to, a compact disk (CD), a digital versatile disk (DVD), and a Blu-ray^{®} disk. The medium I/F 516 controls the reading or writing (storing) of data from or to a storage medium 515 such as a flash memory.

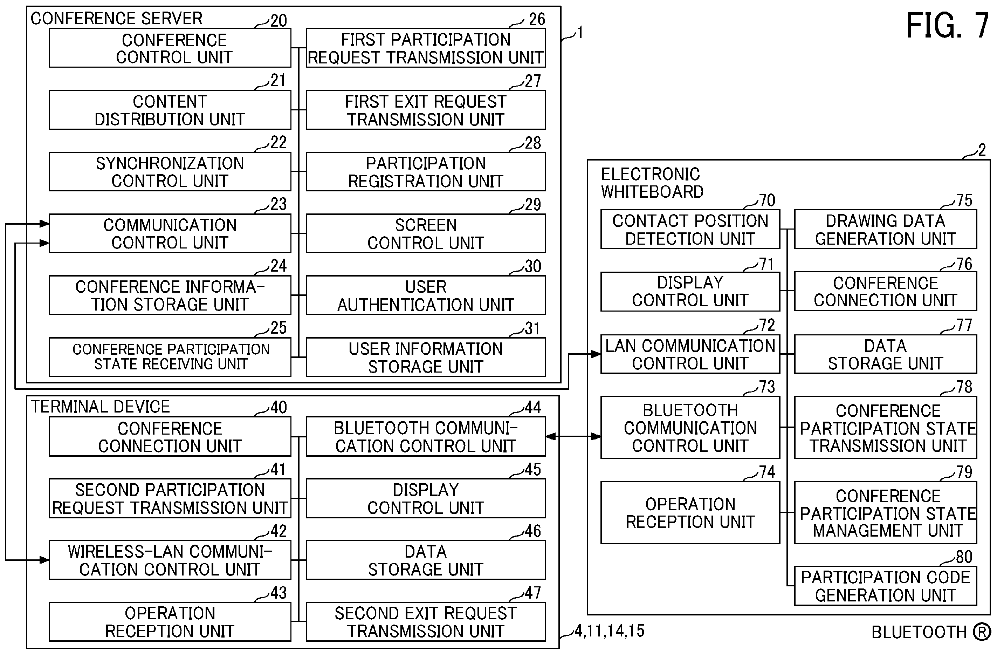

A description is given below of a functional configuration of each function of the conference system 300 with reference to FIG. 7. FIG. 7 is a functional block diagram illustrating an example of the conference server 1, the terminal devices 4, 11, and 14, and the electronic whiteboard 2 in the conference system 300.

The conference server 1 includes a conference control unit 20, a content distribution unit 21, a synchronization control unit 22, a communication control unit 23, a conference information storage unit 24, a conference participation state receiving unit 25, a first participation request transmission unit 26, a first exit request transmission unit 27, a participation registration unit 28, a screen control unit 29, a user authentication unit 30, and a user information storage unit 31. These units included in the conference server 1 are functions or units functioning that are implemented by or caused to function by operating one or more hardware components illustrated in FIG. 6 in cooperation with instructions of the CPU 501 according to the program loaded from the HD 504 to the RAM 503.

The conference control unit 20 manages the participants of the conference and the devices (the terminal devices 4, 11, and 14, and the electronic whiteboard 2) connected to the conference in association with the identification information (conference ID) of the conference. The conference control unit 20 performs a remote conference with each device for each conference ID.

The content distribution unit 21 distributes audio data and image data to and from each device participating in the conference. The image data is, for example, an image or material data of a participant, captured by the terminal device.

The synchronization control unit 22 is a unit that synchronizes the handwritten data and the screen data among the electronic whiteboard 2 and the terminal devices 4, 11, and 14. Specifically, the synchronization control unit 22 acquires handwritten data that is handwritten on any of the electronic whiteboard 2 and the terminal devices 4, 11, and 14, and distributes the handwritten data to the participating electronic whiteboard 2 and the terminal devices 4, 11, and 14 (not including the device that distributes the handwritten data). Similarly, the synchronization control unit 22 acquires screen data from any of the electronic whiteboard 2 and the terminal devices 4, 11, and 14, and distributes the screen data to the participating electronic whiteboard 2 and the terminal devices 4, 11, and 14 (not including the device that distributes the screen data).

The communication control unit 23 transmits and receives data among the electronic whiteboard 2 and the terminal devices 4, 11, and 14 using, for example, WebSocket (a bidirectional communication channel formed on a TCP connection).

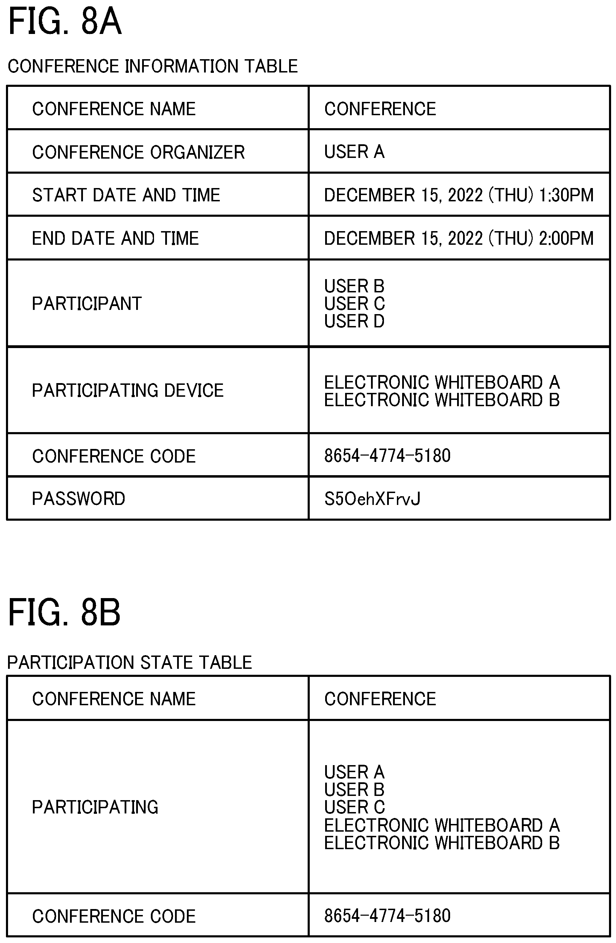

As illustrated in FIG. 8, the conference information storage unit 24 stores conference information and a participation state. The conference information storage unit 24 may store display data on an electronic whiteboard, display data on a terminal device, and audio data received from a device connected to the conference.

The conference participation state receiving unit 25 receives the conference participation state repeatedly transmitted by the electronic whiteboard 2 and a participation code (described later) via the communication control unit 23.

The first participation request transmission unit 26 is a unit that transmits, to the electronic whiteboard 2, the participation request received from the terminal devices 4, 11, or 14 based on the conference participation state received by the conference participation state receiving unit 25. Specifically, the first participation request transmission unit 26 transmits the participation request transmitted from the terminal devices 4, 11, or 14 to the electronic whiteboard 2 based on the conference participation state and the participation code received by the conference participation state receiving unit 25. The first participation request transmission unit 26 determines whether the participation code transmitted from the terminal devices 4, 11, and 14 matches the participation code received by the conference participation state receiving unit 25.

The first exit request transmission unit 27 is a unit that transmits an exit request received from the terminal devices 4, 11, and 14 to the electronic whiteboard 2. Specifically, the first exit request transmission unit 27 transfers the exit request transmitted from the terminal devices 4, 11, and 14 to the electronic whiteboard 2.

The participation registration unit 28 is a unit that registers the participation of the electronic whiteboard 2 in the conference when the conference participation state receiving unit 25 receives the conference participation state indicating that the electronic whiteboard 2 is participating in the conference from the electronic whiteboard 2. Specifically, when the participation registration unit 28 receives the conference participation state indicating that the electronic whiteboard 2 is participating in the conference from the electronic whiteboard 2 that is the transmission destination of the participation request, the participation registration unit 28 registers the state indicating that the electronic whiteboard 2 has participated in the conference in the participation state. When the participation registration unit 28 receives the conference participation state indicating online from the electronic whiteboard 2 that is the transmission destination of the exit request, the participation registration unit 28 deletes the participation of the electronic whiteboard 2 in the conference from the participation state.

The screen control unit 29 controls a screen displayed by the terminal devices 4, 11, and 14. When the terminal device 4, 11, or 14 executes a web application or displays a web page, the screen control unit 29 displays a button in a mode in which the user cannot press the button. When the terminal device 4, 11, or 14 executes a native application, the screen control unit 29 also notifies the terminal devices 4, 11, and 14 of the mode of the button.

The user authentication unit 30 is a unit that authenticates each participant of the conference. Specifically, the user authentication unit 30 checks the username and password received via the communication control unit 23 with the username and password stored in the user information storage unit 31 to authenticate the participant who participates in the conference. The user information storage unit 31 stores the username and password of the user who participates in the conference.

FIG. 8A illustrates a conference information table stored in the conference information storage unit 24. For example, such conference information is set by a conference organizer. The item "conference name" in the conference information table is the name of any conference set by the conference organizer. The item "conference organizer" in the conference information table is a person who registers conference information. In the present embodiment, the conference organizer is one of the participants. The item "start date and time" in the conference information table indicates a date and time at which the conference is scheduled to be started. The item "end date and time" in the conference information table indicates a date and time at which the conference is scheduled to be ended. The item "participant" in the conference information table is a user who participates in the conference other than the conference organizer. The conference information is transmitted to the participants by e-mail. The item "participant device" in the conference information table is an electronic whiteboard, a projector, and a virtual reality (VR) head that is scheduled to be used in the conference. The participant device is registered in the conference server 1 in advance and the conference organizer can select the participant device to set as the participant device. Identification information is assigned to the participant device, and the participant device is associated with an attribute such as a conference room in which the participant device is installed. The item "conference code" in the conference information table is identification information for uniquely identifying a conference. The conference code is assigned by the conference server 1. The item "password" in the conference information table is information to be used for participating in the conference and is usually kept secret from people other than the participants in the conference. When the correct password is input, the user who has input the password is authorized to participate in the process. Eligibility to participate in a conference is also referred to as logging in to the conference.

FIG. 8B illustrated a participation state table stored in the conference information storage unit 24. The participation state table indicates the participants and participant devices currently participating in the conference. The item "conference name" in the participation state table is the same as the conference name of the conference information of FIG. 8A. The participating participant and the electronic whiteboard 2 are registered in the item "participating" in the participation state table. The item "conference code" is the same as the conference code of the conference information of FIG. 8A.

Referring again to FIG. 7, a further description is given below. The terminal devices 4, 11, and 14 includes a conference connection unit 40, a second participation request transmission unit 41, a wireless-LAN communication control unit 42, an operation reception unit 43, a Bluetooth^{®} communication control unit 44, a display control unit 45, a data storage unit 46, and a second exit request transmission unit 47. These units included in the terminal devices 4, 11, and 14 are functions or units functioning that are implemented by or caused to function by operating one or more hardware components illustrated in FIG. 6 in cooperation with instructions of the CPU 501 according to the program (conference application) loaded from the HD 504 to the RAM 503.

The conference connection unit 40 connects to the conference service of the conference server 1 and transmits the username and the password as authentication data. The conference connection unit 40 manages the URL of the conference space and the conference code received from the conference service and performs a process of connecting to the URL of the conference space to participate in the conference.

The second participation request transmission unit 41 is a unit that transmits the participation request for causing the electronic whiteboard 2 to participate in the conference to the conference server 1 in response to an operation of the participant. Specifically, the second participation request transmission unit 41 transmits the participation request to the conference server 1 via the wireless-LAN communication control unit 42 in response to the operation of the participant.

The wireless-LAN communication control unit 42 performs communication with the conference server 1 via the Wi-Fi routers 3 and 10. The Bluetooth^{®} communication control unit 44 performs communication with the electronic whiteboard 2 in conformity with the Bluetooth^{®} standard.

The operation reception unit 43 is a unit that receives transmission of the participation request to a participant list screen that is a screen displaying a participant list of the conference. Specifically, the operation reception unit 43 receives various operations performed input to the terminal devices 4, 11, and 14. The display control unit 45 controls to display the handwritten data and the screen data on a display (liquid crystal display).

The data storage unit 46 stores the URL of the conference service provided by the conference server 1, a URL of a conference space received from the conference service, the conference code, the username of the user who uses the terminal devices 4, 11, and 14, and the password.

The second exit request transmission unit 47 transmits the exit request to the conference server 1 in response to the user operation.

The electronic whiteboard 2 includes a contact position detection unit 70, a display control unit 71, a LAN communication control unit 72, a Bluetooth^{®} communication control unit 73, an operation reception unit 74, a drawing data generation unit 75, a conference connection unit 76, a data storage unit 77, a conference participation state transmission unit 78, a conference participation state management unit 79, and a participation code generation unit 80. These units included in the electronic whiteboard 2 are functions or units functioning that are implemented by or caused to function by operating one or more hardware components illustrated in FIG. 5 in cooperation with instructions of the CPU 401 according to the program (conference application) loaded from the SSD 404 to the RAM 403.

The contact position detection unit 70 detects coordinate data of a portion (a portion where light is blocked) detected by the contact sensor 414 when a finger or the electronic pen 490 comes into contact with the display 480. The drawing data generation unit 75 generates drawing data or a figure such as a circle or a rectangle from the coordinate string input from the contact position detection unit 70 when the user performs handwriting.

The display control unit 71 is a unit that displays electronic whiteboard display data such as handwritten data on the display 480. Specifically, the display control unit 71 controls to display the handwritten data and the screen data of the electronic whiteboard 2 on the display 480.

The LAN communication control unit 72 is connected to the Wi-Fi router 3 or a network such as Ethernet^{®} to communicate with the conference server 1.

The Bluetooth^{®} communication control unit 73 performs communication with the terminal devices 4, 11, and 14 in conformity with the Bluetooth^{®} standard. The operation reception unit 74 receives various operations performed input to the electronic whiteboard 2.

The conference connection unit 76 uses the conference information and the URL of the conference space transmitted from the conference server 1 to control for connecting to the conference service performed by the conference server 1.

The data storage unit 77 stores the URL of the conference service provided by the conference server 1, the conference code, the conference participation state, and the handwritten data and the screen data displayed on the display 480.

The conference participation state transmission unit 78 is a unit that transmits the conference participation state indicating the state of the electronic whiteboard 2 to the conference server 1. Specifically, the conference participation state transmission unit 78 periodically transmits the conference participation state for notifying the user of the existence to the conference server 1. The conference participation state transmission unit 78 transmits the conference participation state to the conference server 1 in response to the participation request or the exit request transmitted from the conference server 1.

The conference participation state management unit 79 manages the presence (conference participation state) of the electronic whiteboard 2. In the present embodiment, the presence is the conference participation state indicating whether the electronic whiteboard 2 is in a state of being ready to participate in a conference.

The participation code generation unit 80 generates a participation code for authentication of the electronic whiteboard 2 at regular time intervals. The display control unit 45 displays the current participation code.

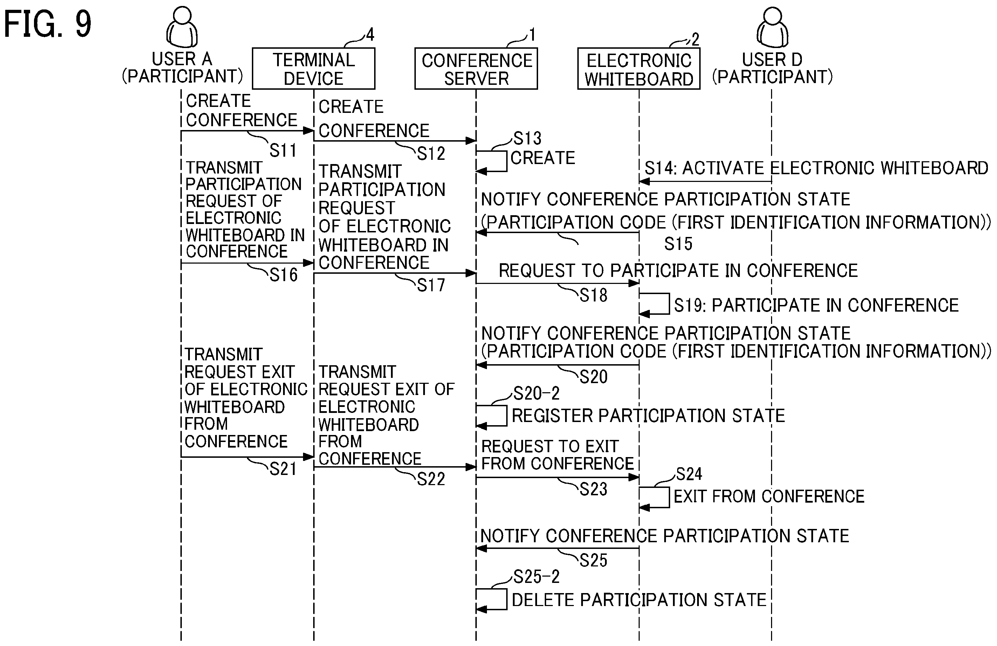

A description is given below of an overall processing flow of participation and exit of the electronic whiteboard 2 in and from the conference without using a password with reference to FIG. 9. FIG. 9 is a sequence diagram illustrating the processing flow in which the user of the terminal devices 4, 11, and 14 and the electronic whiteboard 2 participate in and exit from the conference.

As an example, the user A inputs conference information (a conference name, a start time of a conference, participants, participant devices, and password) to the terminal device 4 (step S11).

The operation reception unit 43 of the terminal device 4 receives the input of the conference information, and the wireless-LAN communication control unit 42 transmits the conference information to the conference server 1 (step S12).

The communication control unit 23 of the conference server 1 receives the conference information (step S13). The conference control unit 20 stores the conference information in the conference information storage unit 24.

A user D to be participated in the conference turns on the power of the electronic whiteboard 2 to boot the electronic whiteboard 2 (step S14).

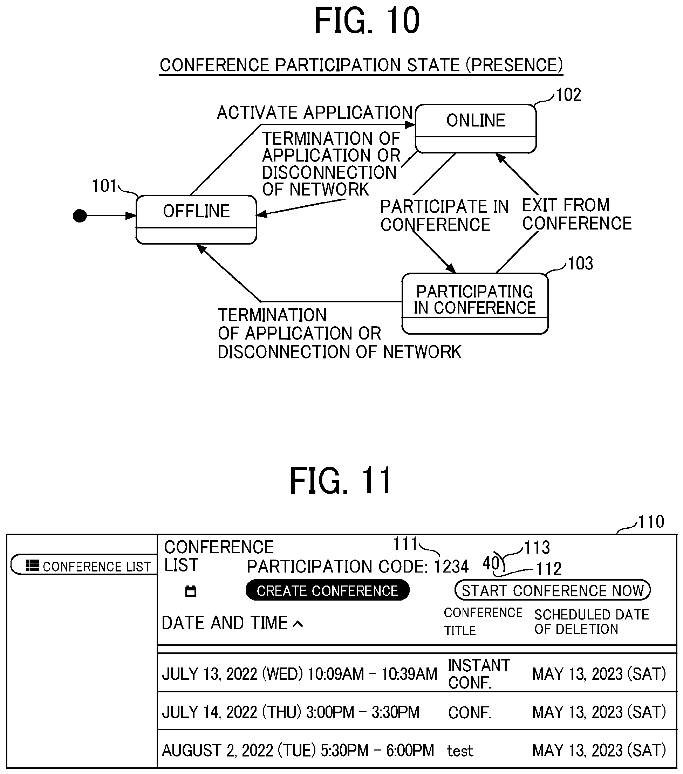

When the electronic whiteboard 2 is booted, the conference participation state transmission unit 78 of the electronic whiteboard 2 notifies the conference server 1 of the conference participation state (the electronic whiteboard 2 has changed from offline to online) via the LAN communication control unit 72 (step S15). The conference participation state is described later with reference to FIG. 10. The conference participation state transmission unit 78 may repeatedly transmit the conference participation state to the conference server 1.

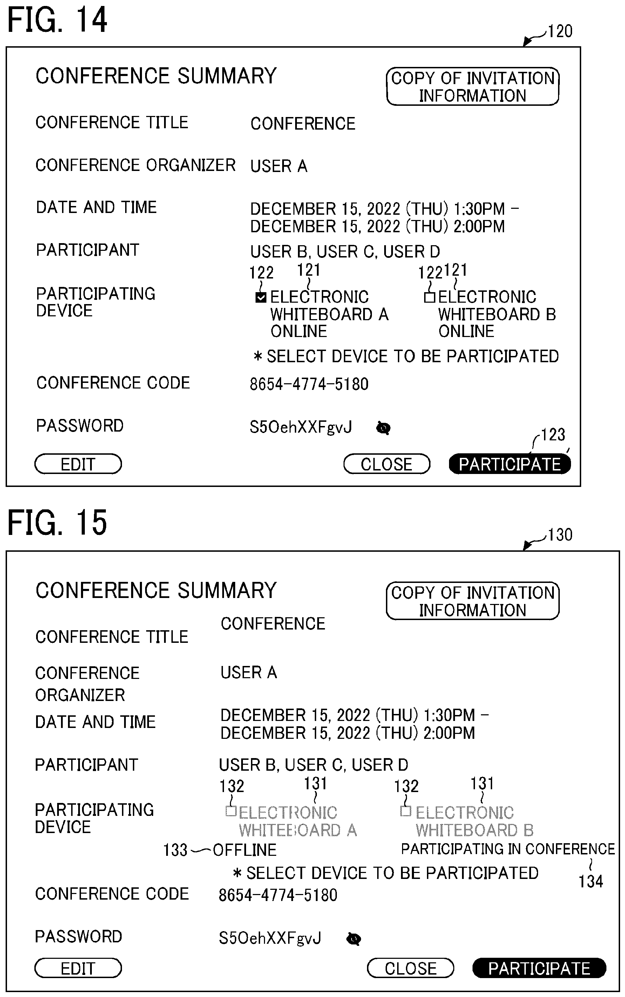

The user A who participates in the conference designates the electronic whiteboard 2 input in the conference information to input an operation to transmit a participation request to the conference server 1 in order to cause the electronic whiteboard 2 to participate in the conference (step S16). FIG. 14 illustrates an example of a screen displayed by the terminal device 4.

The operation reception unit 43 of the terminal device 4 receives the input, and the second participation request transmission unit 41 transmits identification information of the electronic whiteboard 2 and the participation request to the conference server 1 via the wireless-LAN communication control unit 42 (step S17).

The communication control unit 23 of the conference server 1 receives the participation request, and the first participation request transmission unit 26 transmits the participation request to the electronic whiteboard 2 identified by the identification information via the communication control unit 23 (step S18). As described later, the first participation request transmission unit 26 determines whether to transmit the participation request based on the conference participation state, and determines whether to transmit the participation request by authenticating the participation code. The first participation request transmission unit 26 transmits the participation request in response to the conference participation state from the electronic whiteboard 2, and thus the electronic whiteboard 2 can cross the firewall.

When the wireless-LAN communication control unit 42 of the electronic whiteboard 2 receives the participation request from the participant of the conference, the display control unit 71 skips password input (step S19). The conference participation state management unit 79 changes the conference participation state to participating in the conference.

The conference participation state transmission unit 78 of the electronic whiteboard 2 transmits the conference participation state and a participation code to be used temporarily to the conference server 1 as a response to the participation request via the wireless-LAN communication control unit 42 (step S20). The display control unit 71 of the electronic whiteboard 2 displays the participation code as a number on the display.

When the conference server 1 receives the conference participation state indicating that the electronic whiteboard 2 is participating in the conference as a response to the participation request, the participation registration unit 28 registers the electronic whiteboard 2 in the participation state (step S20-2). As a result, the synchronization control unit 22 can synchronize the handwritten data and the screen data between the electronic whiteboard 2 and the terminal devices 4, 11, and 14.

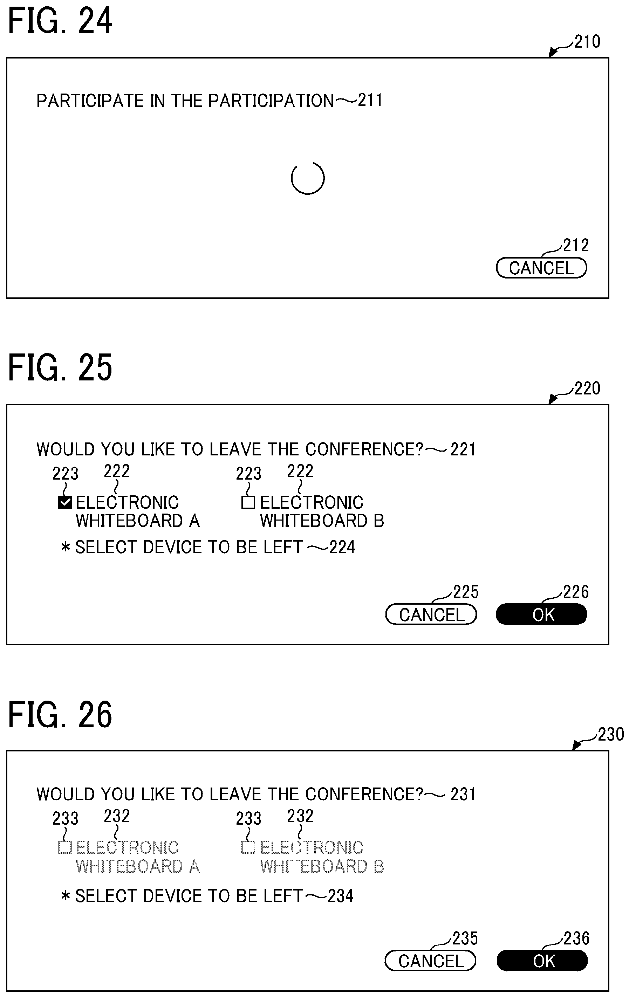

When the conference is finished, the user A inputs an operation to the terminal device 4 to designate the electronic whiteboard 2 input in the conference information and transmit the exit request to the conference server 1 in order to exit the electronic whiteboard 2 from the conference (step S21). FIG. 25 illustrates an example of a screen displayed by the terminal device 4.

The operation reception unit 43 of the terminal device 4 receives the input, and the second exit request transmission unit 47 transmits the identification information of the electronic whiteboard 2 and the exit request to the conference server 1 via the wireless-LAN communication control unit 42 (step S22).

The communication control unit 23 of the conference server 1 receives the exit request, and the first exit request transmission unit 27 transmits the exit request to the electronic whiteboard 2 identified by the identification information via the communication control unit 23 (step S23). Since the first exit request transmission unit 27 transmits the exit request using the session in the conference, the first exit request transmission unit 27 can go beyond the firewall. Even if the exit request is not received from the terminal device 4, the first exit request transmission unit 27 may transmit the exit request to the electronic whiteboard 2 when a predetermined time or more has elapsed from the end time of the conference.

When the wireless-LAN communication control unit 42 of the electronic whiteboard 2 receives the exit request from the participant of the conference, the conference participation state management unit 79 changes the conference participation state to a state indicating that the electronic whiteboard 2 has exited from the conference (i.e., online) (step S24). When the user presses the cancel button within the predetermined time, the conference participation state remains the state indicating that the electronic whiteboard 2 is participating in the conference, in other words, the electronic whiteboard 2 has not exited from the conference.

The conference participation state transmission unit 78 of the electronic whiteboard 2 transmits the conference participation state to the conference server 1 via the LAN communication control unit 72 (step S25).

In the conference server 1, when the conference participation state indicating online is received, the participation registration unit 28 deletes the electronic whiteboard 2 from the participation state (step S25-2).

As described above, since the electronic whiteboard 2 uses the participation request from the participant of the conference, the electronic whiteboard 2 can participate in the conference even if the password is not input to the electronic whiteboard 2. Since the participant of the conference has already participated in (logged in) the conference and the electronic whiteboard 2 has already been registered in the conference, the electronic whiteboard 2 to which the participation request is transmitted can be considered as having been authenticated to participate in the conference without a password.

When the conference server 1 transmits the exit request received from the terminal device 4 to the electronic whiteboard 2 and the conference participation state receiving unit 25 receives the conference participation state indicating online from the electronic whiteboard 2, the participation registration unit 28 can delete the electronic whiteboard 2 from the participation state.

FIG. 10 is a diagram illustrating the transition in the conference participation state. The electronic whiteboard 2 notifies the conference server 1 of a conference participation state as illustrated in FIG. 10 according to the state of the electronic whiteboard 2. The state of presence (conference participation state) such as the offline, online, or participating in the conference, in other words, the conference participation state includes three states of an offline 101, an online 102, and a participating in the conference 103. The conference participation state is the offline 101 immediately after the system is started. When conference application is activated in the electronic whiteboard 2 and the electronic whiteboard 2 is connected to the conference server 1, the conference participation state changes from the offline 101 to the online 102. When the electronic whiteboard 2 receives the participation request from the conference server 1, the conference participation state changes from the online 102 to the participating in the conference 103. When the electronic whiteboard 2 receives the exit request from the conference server 1, the conference participation state changes from the participating in the conference 103 to the online 102. When electronic whiteboard 2 is powered off, the conference application is ended, or the network is disconnected, then the conference participation state changes from the online 102 to the offline 101. When electronic whiteboard 2 is powered off, the conference application is ended, or the network is disconnected, then the conference participation state changes from the participating in the conference 103 to the offline 101.

The conference participation state management unit 79 of the electronic whiteboard 2 manages the conference participation state of the electronic whiteboard 2. When the conference participation state is changed, the conference participation state management unit 79 notifies the conference server 1 of the conference participation state. A conference participation state receiving unit 25 periodically notifies the conference server 1 of the existence of the conference participation state of being online or participating in the conference so that the conference server 1 can detect the offline state due to the network interruption.

FIG. 11 is a diagram illustrating a participation code 111 displayed on the electronic whiteboard 2. The participation code generation unit 80 generates the participation code 111 that is valid for a certain period of time, and the display control unit 71 causes the display 480 of the electronic whiteboard 2 to display the participation code. The participation code 111 is notified to the conference server 1. The users A and C who transmit the participation request input the participation code by confirming the electronic whiteboard 2. When the participation code from the electronic whiteboard 2 matches the participation code 111 from the terminal devices 4 and 14, the conference server 1 transmits the participation request to the electronic whiteboard 2.

The participation code 111 is transmitted to the conference server 1 together with the transmission of the conference participation state. The participation code 111 is also transmitted when the participation code 111 is changed. The participation code 111 may be repeatedly transmitted separately from the conference participation state.

As illustrated in FIG. 11, a countdown bar 113 is displayed around the participation code 111, and a time 112 during which the participation code 111 is valid is displayed while being counted down. When the time is up by the countdown of the countdown bar 113, the participation code generation unit 80 updates the participation code 111. Accordingly, the participation code changes at regular time intervals. Since the participation code is changed, it is easily to ensure security when participating in a conference without a password.

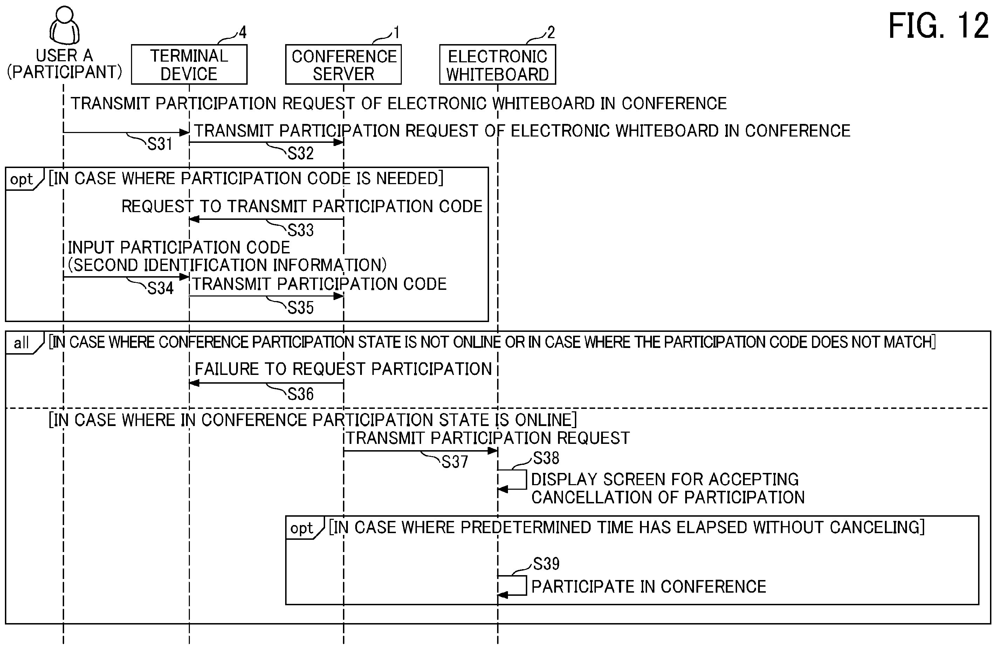

A description is given below of a processing flow of transmission of the participation request from the terminal devices 4 and 14 with reference to FIG. 12. FIG. 12 is a sequence diagram illustrating a processing flow in which the users A and C operate the terminal devices 4 and 14, and the terminal devices 4 and 14 transmit the participation request to the conference server 1. In the following, for the sake of simplicity, a case where the user A operates the terminal device 4 is described.

The user A inputs an operation to participate in the conference to the terminal device 4 (step S31). In the present embodiment, the user A participates in the conference, and the electronic whiteboard 2 also participates in the conference.

The operation reception unit 43 of the terminal device 4 receives the operation (step S32). When the participant device is set in the conference information, the second participation request transmission unit 41 transmits a participation request of the user A and the participation request specifying the identification information of the electronic whiteboard 2 to the conference server 1 via the wireless-LAN communication control unit 42. In other words, the participation of the user A and the participation of the electronic whiteboard 2 are transmitted to the conference server 1 by one operation.

When the communication control unit 23 of the conference server 1 receives the participation request designating the electronic whiteboard 2, the first participation request transmission unit 26 refers to the conference participation state received last from the electronic whiteboard 2 (step S33). When the conference participation state is online, the communication control unit 23 requests the terminal device 4 to transmit a participation code.

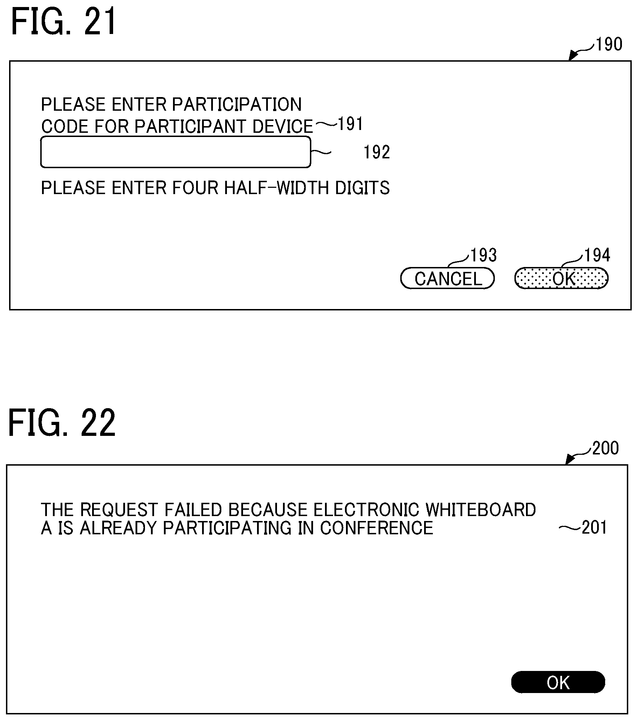

The wireless-LAN communication control unit 42 of the terminal device 4 receives the request for the participation code, and the display control unit 45 displays a participation code input screen 190 (step S34). FIG. 21 is a diagram illustrating an example of the participation code input screen 190. The user A uses the participation code displayed on the electronic whiteboard 2 and inputs the participation code to the participation code input screen 190.

The operation reception unit 43 of the terminal device 4 receives the entry of the participation code (step S35). The second participation request transmission unit 41 transmits the participation code (an example of first identification information) to the conference server 1 via the wireless-LAN communication control unit 42. The communication control unit 23 of the conference server 1 receives the participation code, and the first participation request transmission unit 26 determines whether the transmitted participation code matches the participation code (an example of a second identification information) attached to the last conference participation state. When the transmitted participation code matches the participation code attached to the last conference participation state and the conference participation state is online, the first participation request transmission unit 26 transmits the participation request to the electronic whiteboard 2 via the communication control unit 23.

When the conference participation state is not online but offline or participating in the conference in step S33, or when the transmitted participation code does not match the participation code attached to the last conference participation state, the communication control unit 23 transmits a failure of the participation request to the terminal device 4 (step S36). The first participation request transmission unit 26 does not transmit the participation request to the electronic whiteboard 2. As described above, the conference server 1 cannot transmit a participation request to the electronic whiteboard 2 that is offline or participating in the conference.

As described later, when the conference participation state is offline or participating in a conference, the terminal device 4 cannot transmit a participation request. Thus, the terminal device 4 is determined to be offline or participating in a conference in step S36 when the conference participation state is other than online at the time of determining that the participation code matches. As a result, even when the conference participation state is changed to a state other than the online state, the conference server 1 can transmit the participation request failure to the terminal device 4.

When the conference participation state is participating in the conference, the conference server 1 may forcibly change the conference participation state to online. For example, when the electronic whiteboard 2 is used for a conference after the scheduled end time of a previous conference, the conference server 1 transmits to the electronic whiteboard 2, a participation request and a command to change the conference participation state from participating in the conference to online at the start time of a subsequent conference. Accordingly, the electronic whiteboard 2 can transmit the conference participation state indicating online to the conference server 1, and thus the electronic whiteboard 2 can participate in the subsequent conference.

When it is determined in step S35 that the participation code matches and the conference participation state is online, the first participation request transmission unit 26 transmits the participation request to the electronic whiteboard 2 via the communication control unit 23 (step S37).

The LAN communication control unit 72 of the electronic whiteboard 2 receives the participation request, and the display control unit 71 displays a screen for accepting cancellation of the participation (step S38). A description is given below of the screen for accepting cancellation of the participation with reference to FIG. 24. This is used in a case where the user D has just activated the electronic whiteboard 2 and may not have an intention to participate in the conference. When the user D does not participate in the conference, the user D inputs a cancel to the electronic whiteboard 2.

When a predetermined time has elapsed without the user D canceling the conference, the conference participation state management unit 79 changes the conference participation state to participating in the conference (step S39). The electronic whiteboard 2 receives the participation cancellation after the participation processing has been finished (the conference participation state has been changed to participating in the conference), the electronic whiteboard 2 ignores the participation cancellation. After that, as described in step S25 of FIG. 9, the conference participation state indicating participating in the conference is transmitted to the conference server 1.

An additional description is given below for a case where the participant is the guest user G. It is preferable that a user who is not an official participant of the conference, such as the guest user G, cannot transmit a participation request. A malicious person may view the handwritten data or the screen data on the electronic whiteboard 2 as the guest user G.

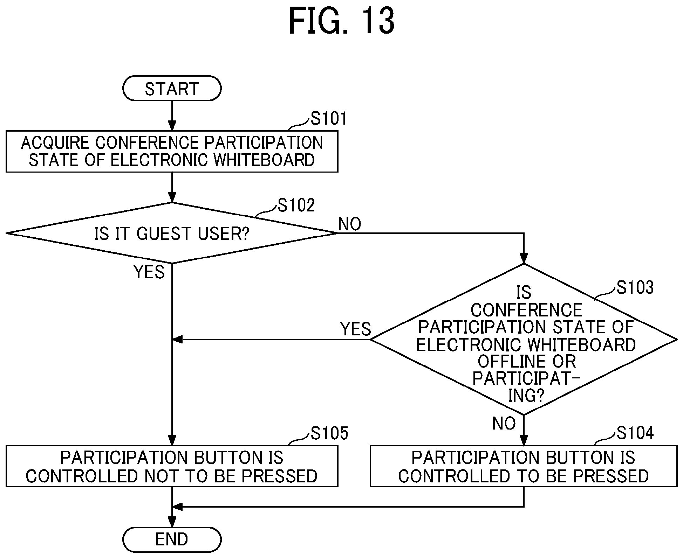

FIG. 13 is a flowchart of a process in which the conference server 1 controls the screen of the terminal device in accordance with the guest user G and the conference participation state.

The conference server 1 receives the conference participation status from the electronic whiteboard 2 as described above (step S101).

Subsequently, the screen control unit 29 determines whether the user of the terminal device is the guest user G (step S102). The guest user G is a user who is not registered in the user information storage unit 31. The guest user G is, for example, an employee of a business partner or an employee of a branch office. Since the guest user G logs in to the conference server 1 with the guest ID and password, the user authentication unit 30 has already determined whether the user is the guest user G.

When the user is not the guest user G, the screen control unit 29 determines whether the conference participation state is offline or participating in the conference (S103).

When the conference participation state is offline or participating in the conference (YES in step S103), the process proceeds to step S105.

When the conference participation state is not offline or not participating in the conference (NO in step S103), the screen control unit 29 notifies the terminal devices that the participation button is controlled to be pressed (step S104). In other words, the screen control unit 29 generates screen information based on the conference participation state and transmits the screen information to the terminal device 4 via the communication control unit 23. The display control unit 45 of the terminal device 4 displays a conference detail screen based on the screen information.

When the user is the guest user G (YES in step S102), or when the conference participation state is offline or participating in the conference (YES in step S103), the screen control unit 29 notifies the terminal devices that the participation button is controlled not to be pressed (step S105). In other words, the screen control unit 29 generates screen information based on the guest user G and transmits the screen information to the terminal device 15 via the communication control unit 23. The display control unit 45 of the terminal device 15 displays a conference detail screen based on the screen information.

As a result, a user who is not an official participant of the conference, such as the guest user G, can be prevented from transmitting a participation request.

In the flowchart of FIG. 13, the process of controlling whether to press the button depending on whether the user is a guest user is the same as that in the case of the screen on which the user transmits the exit request.

A description is given below of a conference detail screen 120 displayed by the terminal device with reference to FIGS. 14 and 15. FIG. 14 is a diagram illustrating an example of the conference detail screen 120 displayed in step S104 of FIG. 13. The conference detail screen 120 is a screen for displaying conference information. The conference detail screen 120 displays check boxes 122 displayed together with participant devices 121 so that the user can input.

When the user A checks the check box 122 and presses a participation button 123, the second participation request transmission unit 41 transmits a participation request of the electronic whiteboard 2 to the conference server 1 together with information indicating that the user A participates in the conference. Immediately after the user A presses the participation button 123, the terminal device 4 displays the participation code input screen 190 illustrated in FIG. 21, and details thereof is described later with reference to FIG. 21.

FIG. 15 is a diagram illustrating an example of a conference detail screen 130 displayed in step S105 of FIG. 13 when the conference participation state is offline or participating in the conference. In the conference detail screen 130, check boxes 132 displayed together with the participant devices 131 are displayed so that the user cannot input. The "user cannot input" indicates that the user cannot display a check mark in the check boxes 132. Since the check mark cannot be displayed, the terminal device 4 cannot receive an input. The participant devices 131 and the check boxes 132 are half-brightness to indicate that no input is available. On the other hand, the conference detail screen 130 displays conference participation states 133 and 134 are displayed. The conference participation states 133 and 134 indicates the reason why the input is not available (offline or participating in the conference). Since the user can understand the reason why the electronic whiteboard 2 cannot be selected, and thus the user can take appropriate action.

Since the screen control unit 29 of the conference server 1 transmits the conference participation state of the electronic whiteboard 2 to the terminal device 4, the display control unit 45 can restrict the reception of the transmission of the participation request when the conference participation state is the participating in the conference or the offline.

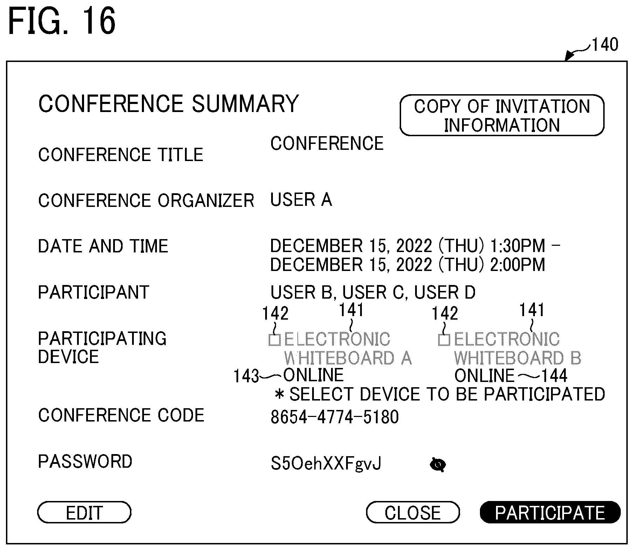

FIG. 16 is a diagram illustrating an example of a conference detail screen 140 displayed by the terminal device 15 operated by the guest user G in step S105 of FIG. 13. Similar to FIG. 15, participant devices 141 and check boxes 142 are half-brightness, but conference participation states 143 and 144 are online. Accordingly, it is possible to assume that the participant is the guest user G and thus cannot be input to the check boxes 142, and further, the reason why the input cannot be available (the guest user G). Alternatively, the conference detail screen 140 displayed by the terminal device 15 may display the reason why the user is a guest user and thus cannot input the information in the check box 142.

The screen control unit 29 of the conference server 1 transmits information indicating that the participant is the guest user G to the terminal device 15 based on the authentication result by the user authentication unit 30. When the display control unit 45 of the terminal device 15 receives the notification that the participant is the guest user G, the display control unit 45 can restrict the reception of the transmission of the participation request.

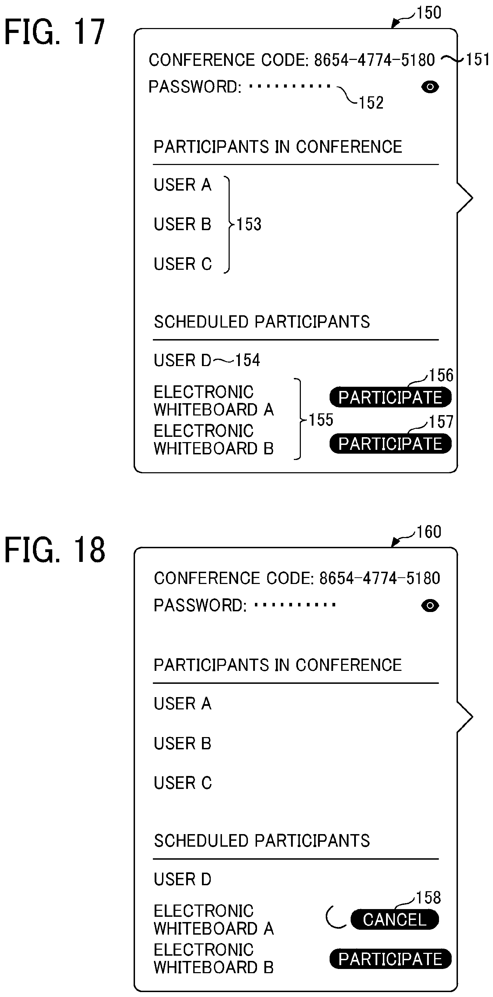

The examples of the screens where the user A or the guest user G displays the conference detail screen and causes the electronic whiteboard 2 to participate together with the user have described above with reference to FIGS. 14 to 16. A description is given below of a participation request of the electronic whiteboard 2 from a participant list screen displayed when the participant has already participated in the conference with reference to FIGS. 17 to 20.

FIG. 17 is a diagram illustrating an example of a participant list screen 150 that any one of the user A, B, or C displays on the terminal devices 4, 11, or 14. For the sake of simplicity, it is assumed that the user A displays the participant list screen 150 on the terminal device 4. In FIG. 17, it is assumed that the electronic whiteboard 2 is online.

The participant list screen 150 displays a conference code 151 and a password 152 set in the conference information. The participant list screen 150 displays a username 153 including a user who is currently participating in the conference and a username 154 including a user who has not participated in the conference yet but is set as a participant in the conference information. Similarly, a participant device 155 that has not yet participated in the conference but is set in the conference information as a participant device is displayed. Participation buttons 156 and 157 are displayed for the participant device 155. Since the user A is not the guest user G and the electronic whiteboard 2 is online, the participation buttons 156 and 157 are displayed in a mode in which the buttons can be pressed (the buttons are not at half-brightness).

When the user A presses the participation button 156 or 157, the operation reception unit 43 receives the transmission of the participation request, and the second participation request transmission unit 41 transmits the participation request to the conference server 1.

FIG. 18 is a diagram illustrating an example of the participant list screen 160 after the user A has pressed the participation button 156. Immediately after the user A presses the participation button 156, the terminal device 4 displays the participation code input screen 190 illustrated in FIG. 21.

FIG. 21 is a diagram illustrating an example of the participation code input screen 190 displayed by the terminal device 4. The participation code input screen 190 includes a message 191 "Please input participation code of participant device", a participation code input field 192, a cancel button 193, and an OK button 194. The user A inputs the participation code displayed on the electronic whiteboard 2 to the participation code input field 192 and presses the OK button 194. Accordingly, the participation code is transmitted to the conference server 1, and the participant list screen 160 of FIG. 18 is displayed.

Referring again to FIG. 18, a further description is given below. When the participation code is transmitted to the conference server 1, a cancel button 158 is displayed on the participant list screen 160. The cancel button 158 is displayed until the electronic whiteboard 2 transmits the participation code to the conference server 1, the electronic whiteboard 2 transmits the conference participation state indicating that the electronic whiteboard 2 is participating in the conference to the conference server 1, and the conference server 1 notifies the terminal device 4 of success of the participation request, or notifies the terminal device 4 of failure of the participation request. Accordingly, the user A can cancel the participation request that has been transmitted in error.

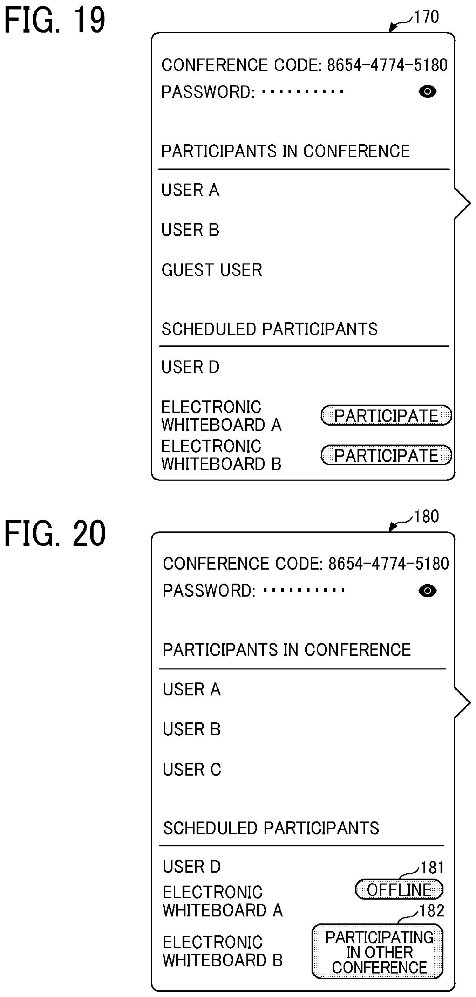

FIG. 19 is a diagram illustrating an example of a participant list screen 170 that the guest user G displays on the terminal device 15. The content of the participant list screen 170 is the same as those in FIG. 17. However, the participation buttons 156 and 157 are displayed in a mode in which the button cannot be pressed (e.g., half-brightness) on the participant list screen 170 displayed by the guest user G. As described above, even during the participation in the conference, the guest user G cannot press the participation button of the electronic whiteboard 2, and thus security can be further enhanced.

The screen control unit 29 of the conference server 1 transmits information indicating that the participant is the guest user G to the terminal device 15 based on the authentication result by the user authentication unit 30. When the display control unit 45 of the terminal device 15 receives the notification that the participant is the guest user G, the display control unit 45 can restrict the reception of the transmission of the participation request.

FIG. 20 is a diagram illustrating an example of a participant list screen 180 that the user A displays on the terminal device 4. In FIG. 20, the conference participation state of the electronic whiteboard 2 is offline or participating in the conference. The content of the participant list screen 180 is the same as those in FIG. 17. However, since the conference participation state of the electronic whiteboard 2 is offline or participating in the conference, the participation buttons 181 and 182 are displayed in a mode in which the participation buttons 181 and 182 cannot be pressed (e.g., half-brightness). The participation buttons 181 and 182 display the conference participation state (offline, participating in the conference). As described above, even during the participation in the conference, the user A can understand the reason why the user A cannot press the participation button of the electronic whiteboard 2, and thus can take an appropriate action.

Since the screen control unit 29 of the conference server 1 transmits the conference participation state of the electronic whiteboard 2 to the terminal device 4, the display control unit 45 can restrict the reception of the transmission of the participation request when the conference participation state is the participating in the conference or the offline.

FIG. 22 is a diagram illustrating an example of a participation request failure screen 200 displayed by the terminal device 4 in step S36 of FIG. 12. The participation request failure screen 200 displays a message 201 "The request failed because the electronic whiteboard A is already participating in meeting." The content of message 201 is changed based on the reason why the participation request failed. For example, when the electronic whiteboard 2 is offline, the message 201 is "The request has failed because the electronic whiteboard A is offline".

After the user A has transmitted the participation request from the terminal device 4 to the electronic whiteboard 2, the user A can cancel the participation request. Accordingly, when the user A transmits the participation request by mistake, the participation of the electronic whiteboard 2 can be canceled. The user A can cancel the participation of the electronic whiteboard 2 until the electronic whiteboard 2 participates in the conference. The cancellation is allowed, for example, until the electronic whiteboard 2 transmits the conference participation state indicating that the electronic whiteboard 2 is participating in the conference to the conference server 1 or until the conference server 1 notifies the terminal device 4 of a failure in the participation request.

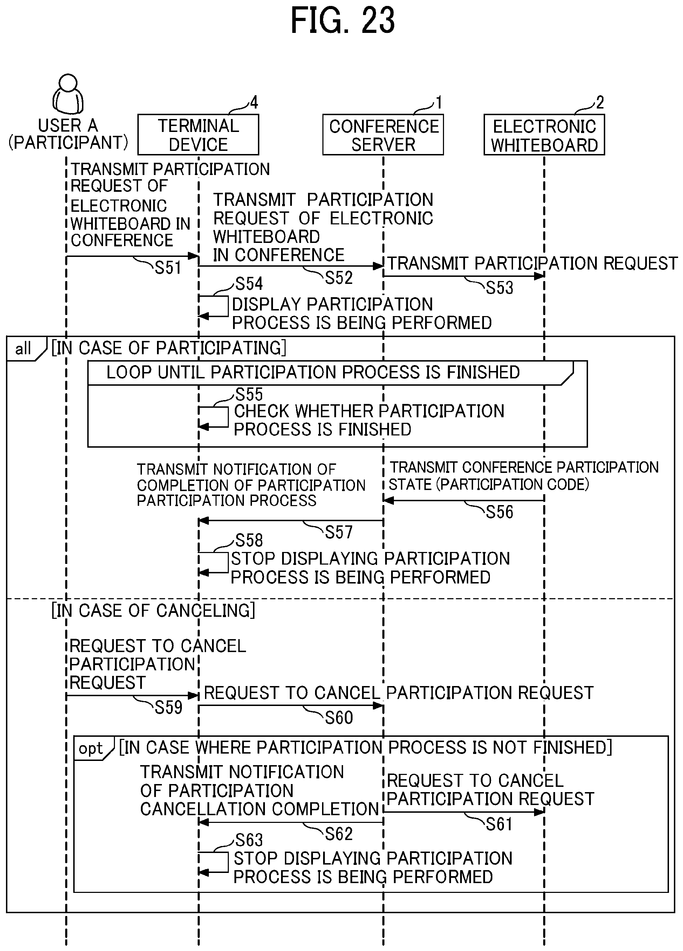

FIG. 23 is a sequence diagram illustrating a processing flow in which the user A operates the terminal device 4 to cancel the participation request of the electronic whiteboard 2.

The user A inputs an operation to cause the electronic whiteboard 2 to participate in the conference to the terminal device 4, as described above with reference to FIG. 12 (step S51). Since the transmission of the participation request has been described above, a brief description is given.

The operation reception unit 43 of the terminal device 4 receives an operation (step S52). The second participation request transmission unit 41 transmits the participation request to the conference server 1 via the wireless-LAN communication control unit 42 with the identification information of the electronic whiteboard 2 being specified.

When the communication control unit 23 of the conference server 1 receives the participation request designating the electronic whiteboard 2, the first participation request transmission unit 26 confirms the conference participation state and the matching of the participation code and transmits the participation request to the electronic whiteboard 2 (step S53).

After transmitting the participation request, the display control unit 45 of the terminal device 4 displays a cancel button or an hourglass indicating that the participation process is being performed (e.g., see FIG. 18) (step S54).

When the user A causes the electronic whiteboard 2 to participate without canceling the participation, the display control unit 45 of the terminal device 4 continues to display that the participation process is being performed (step S55).

In response to the participation request, the LAN communication control unit 72 of the electronic whiteboard 2 transmits the conference participation state (participating in the conference) to the conference server 1 (step S56).

Since the communication control unit 23 of the conference server 1 receives the conference participation state (participating in the conference), the participation registration unit 28 registers the electronic whiteboard 2 in the participation state and the communication control unit 23 transmits a completion of the participation of the electronic whiteboard 2 to the terminal device 4 of (step S57).

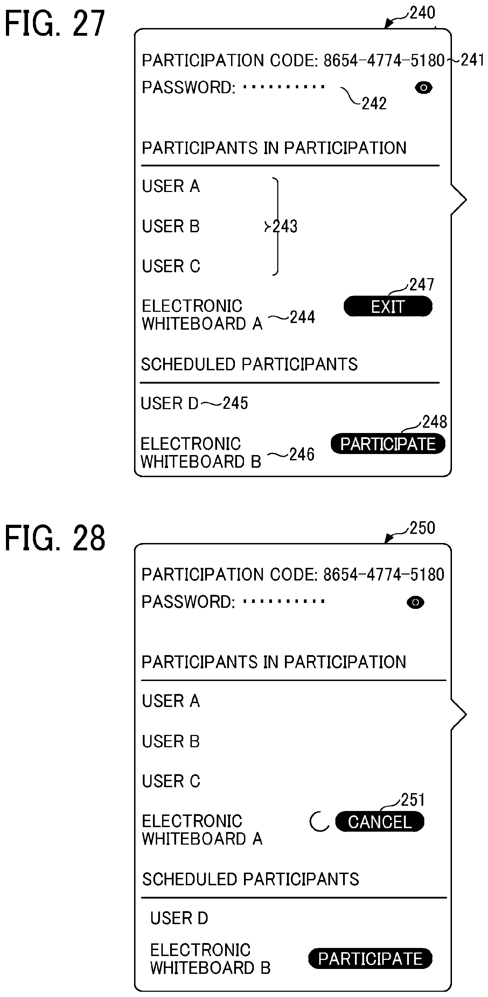

When the wireless-LAN communication control unit 42 of the terminal device 4 receives the completion of participation, the display control unit 45 ends the display indicating that the participation process is being performed (step S58). For example, the display control unit 45 can display an exit button (e.g., see FIG. 27).

On the other hand, when the user A cancels the participation of the electronic whiteboard 2, the user A inputs an operation of canceling the participation request to the terminal device 4 (e.g., pressing the cancel button 158 in FIG. 18) (step S59).

The operation reception unit 43 of the terminal device 4 receives the operation (step S60). The second participation request transmission unit 41 transmits a cancellation request of the participation request to the conference server 1 via the wireless-LAN communication control unit 42 by designating the identification information of the electronic whiteboard 2. In other words, when the cancel button 158 is pressed after the transmission of the participation request, the second participation request transmission unit 41 transmits the cancellation request of the participation request to the conference server 1 in response to the operation of the user A.

When the communication control unit 23 of the conference server 1 receives the cancellation request of the participation request designating the electronic whiteboard 2, the first participation request transmission unit 26 determines whether the electronic whiteboard 2 is already registered in the participation state. When the electronic whiteboard 2 is registered in the participation state, the first participation request transmission unit 26 discards the cancellation request of the participation request.

When the electronic whiteboard 2 is not registered in the participation state, the first participation request transmission unit 26 transmits the cancellation request of the participation request to the electronic whiteboard 2 via the communication control unit 23 (step S61). As described above, the first participation request transmission unit 26 transmits the cancellation request of the participation request to the electronic whiteboard 2 until the conference participation state receiving unit 25 receives the conference participation state indicating that the electronic whiteboard 2 is participating in the conference from the electronic whiteboard 2.

When the conference server 1 receives the conference participation state indicating that the conference server 1 is participating in the conference after the terminal device 4 has transmitted the cancellation request of the participation request, the first participation request transmission unit 26 discards the cancellation request of the participation request.

Since the communication control unit 23 of the conference server 1 cancels the participation request, the communication control unit 23 transmits a completion of participation cancellation of the electronic whiteboard 2 to the terminal 4 (step S62).

When the wireless-LAN communication control unit 42 of the terminal device 4 receives the completion of the cancellation request of the participation request, the display control unit 45 ends the display indicating that the participation process is being performed (step S63). For example, the display control unit 45 can display the participation button again (e.g., see FIG. 17).

As described above, when the user A transmits the participation request by mistake, the participation of the electronic whiteboard 2 can be canceled.

FIG. 24 is a diagram illustrating an example of the conference participation screen 210 displayed on the electronic whiteboard 2 which has received the participation request in step S37 in FIG. 12. The conference participation screen 210 is a screen for notifying a user near the electronic whiteboard 2, such as the user D, that the electronic whiteboard 2 participates in the conference. The conference participation screen 210 displays a message 211 "You will participate in the conference" and a cancel button 212. The "conference" in the message 211 is the name of the conference in which the user A participates. The conference server 1 transmits the conference name to the electronic whiteboard 2 together with the participation request.

As described above, when the electronic whiteboard 2 receives the participation request, the electronic whiteboard 2 displays the notification that the electronic whiteboard 2 participates in the conference, and can accept the cancellation of the participation in the conference for a predetermined time. When the predetermined time elapses without the user D canceling the conference, the user D enters the conference (step S39 in FIG. 12). When the user D cancels the conference, the conference participation screen 210 returns to the home screen (initial screen).

When the participation request is transmitted to the electronic whiteboard 2 whose conference participation state is participating in the conference due to a miscommunication, the conference participation state transmission unit 78 of the electronic whiteboard 2 rejects the participation request transmitted later.

A description is given below of the exit request with reference to FIGS. 25 to 30. For example, when the conference ends, the user A exits the conference. At that time, the electronic whiteboard 2 participating in the conference is caused to exit the conference. In other words, in the present embodiment, the user A and the electronic whiteboard 2 can exit with one operation.

FIG. 25 is a diagram illustrating an example of a first exit request screen 220 displayed by a terminal device 4. The first exit request screen 220 includes a message 221 "Would you like to leave the conference?", a check box 223 associated with the participant device 222, a message 224 "Please select device to be left", a cancel button 225, and an OK button 226. The participant device 222 to be displayed is the electronic whiteboard 2 alone participating in the conference in which the user A participates. Accordingly, the user A does not need to transmit an exit request which is not desired.

When the OK button 226 is pressed, the second exit request transmission unit 47 can transmit the exit request to the conference server 1 together with information indicating that the user A exits from the conference.

As illustrated in FIG. 26, since the guest user G cannot transmit the participation request, the guest user G cannot cause the participant device to exit. FIG. 26 is a diagram illustrating an example of a second exit request screen 230 displayed on the terminal device 15 operated by the guest user G. The second exit request screen 230 includes a message 231 "Would you like to leave the conference?", check boxes 233 associated with participant devices 232, a message 234 "Please select device to be left", a cancel button 235, and an OK button 236. However, since the participant devices 232 and the check boxes 233 are displayed with half-brightness, the guest user G cannot check them.

When the participant is the guest user G based on the authentication result by the user authentication unit 30, the screen control unit 29 of the conference server 1 transmits screen information corresponding to the second exit request screen 230 to the terminal device 15. The display control unit 45 of the terminal device 15 can restrict the reception of the transmission of the participation request based on the screen information.

Subsequently, a description is given below of the cancellation of the exit request. Even after the terminal device 4 has transmitted the exit request to the conference server 1, the user A can cancel the exit request.

In FIGS. 27 to 29, a description is given of the exit request from the participant list screen displayed when the participant has already participated.

FIG. 27 is a diagram illustrating an example of a participant list screen 240 (at the time of exit from the conference) displayed on any of the terminal devices 4, 11, or 14 by any of the user A, B, or C. For the sake of simplicity, it is assumed that the user A displays the participant list screen 240 on the terminal device 4.

The participant list screen 240 displays a conference code 241 and a password 242 set in the conference information. The participant list screen 240 displays a username 243 and a participant device 244 which are currently participating in the conference, and an exit button 247. The participant list screen 240 also displays a username 245 and a participating device 246 which have not participated in the conference yet but are set as participants in the conference information and a participation button 248. The exit button 247 is a button for causing the electronic whiteboard 2 to exit. The participation button 248 is a button for causing the electronic whiteboard 2 to participate. Since the user A is not the guest user G, the exit button 247 and the participation button 248 are displayed in a mode in which the user A can press the buttons.

When the exit button 247 is pressed, the operation reception unit 43 receives the transmission of the exit request, and the second exit request transmission unit 47 transmits the exit request to the conference server 1.

FIG. 28 is a diagram illustrating an example of a participant list screen 250 (at the time of exit from the conference) after the user A has pressed the exit button 247. The cancel button 251 is displayed during the following operations. After the user A has pressed the exit button 247, the exit request is transmitted to the conference server 1. The conference server 1 transmits the exit request to the electronic whiteboard 2. The electronic whiteboard 2 transmits the conference participation state indicating the electronic whiteboard 2 is online to the conference server 1. The conference server 1 notifies the terminal device 4 of the completion of exit.

During these operation described above, the cancel button 251 is displayed on the participant list screen 250. While the cancel button 251 is displayed, the user A can cancel the exit request.

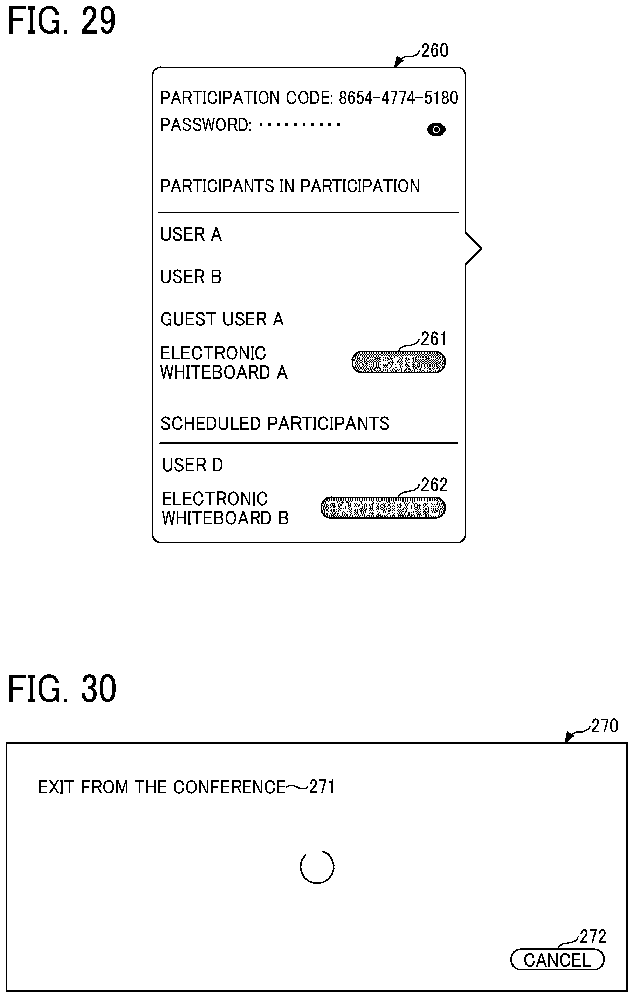

FIG. 29 is a diagram illustrating an example of a participant list screen 260 (at the time of exit from the conference) displayed by the guest user G on the terminal device 15. The content of the participant list screen 260 is the same as those in FIG. 27. However, in the participant list screen 260 displayed by the guest user G, an exit button 261 and a participation button 262 are displayed in a mode in which they cannot be pressed (e.g., half-brightness). As described above, since the guest user G cannot press the exit button 261 of the electronic whiteboard 2, the terminal device 15 can prevent the guest user G who is not familiar with the operation from causing the electronic whiteboard 2 to exit by mistake.

The conference server 1 transmits information indicating that the participant is the guest user G to the terminal device 15 based on the authentication result by the user authentication unit 30. When the display control unit 45 of the terminal device 15 receives the notification that the participant is the guest user G, the display control unit 45 can restrict the reception of the transmission of the participation request.

FIG. 30 is a diagram illustrating an example of a conference exit screen 270 displayed the electronic whiteboard 2 which has received the exit request in step S24 of FIG. 9. The conference exit screen 270 is a screen for notifying a user near the electronic whiteboard 2, such as the user D, that the electronic whiteboard 2 exits from the conference. The conference exit screen 270 displays a message 271 "You will exit from the conference" and a cancel button 272. The "conference" in the message 271 is the conference name in which the user A participates. The conference name is transmitted to the electronic whiteboard 2 by the conference server 1 together with the exit request. The user can press the cancel button 272 within a predetermined time. The user D can cancel the exit request when the user D is still participating in the conference. When the predetermined time elapses, the conference exit screen 270 is deleted and a home screen (e.g., initial screen and power off) is displayed.

Since an electronic whiteboard according to the present embodiment can log in (or participate in) a conference in response to a participation request from a participant (terminal device) of the conference, the participant can save the effort of inputting a password to the electronic whiteboard.

Any one of the above-described operations may be performed in various other ways, for example, in an order different from the one described above.

Further, the handwritten data and the screen data of the electronic whiteboard 2 may be displayed in a virtual conference space. The virtual conference space indicates a virtual space that can be viewed with virtual reality (VR) goggles. In this case, the image data of the electronic whiteboard 2 and the image data of the virtual conference space are synchronized.

In the present embodiment, the display method of the mode in which the user cannot input the check box or the button of the participant device is set to the half-brightness, but the check box or the button itself may not be displayed. As a mode in which the user cannot input the participant device, the color of the check box may be changed, or a message such as "input is not allowed" may be displayed.

In the present embodiment, the user A inputs the participation code from the terminal device 4, but the input of the participation code may be omitted. In this case, the user Ais logged in and participates in the conference, and thus the user A is assumed to have the authority to use the electronic whiteboard 2.

The electronic whiteboard may be referred to as an electronic whiteboard or an electronic information board. The present embodiment is not limited to the electronic whiteboard and can be suitably applied to any information processing apparatus having a touch screen. Examples of the information processing apparatus having a touch screen include a PC, a tablet terminal, and a smartphone each having a touch panel. These are usually general-purpose information processing apparatuses, but when an application that functions as a display apparatus is executed, the user can operate the apparatus as a display apparatus.

The method of participating in a conference according to the present embodiment can be applied to a projector used in a conference, in addition to the electronic whiteboard. In this case, the projector projects the conference code.

The examples of configuration illustrated in, for example, FIG. 7 are divided according to main functions in order to facilitate understanding of processing by the conference system 300. The scope of the present disclosure is not limited by how the process units are divided or by the names of the process units. The processes implemented by the conference system 300 can be divided into a larger number of processes depending on the contents of processes. One process may be divided to include a larger number of processes.

The functions of the embodiments described above may be implemented by one or a plurality of processing circuits. The "processing circuit" in the present specification includes a processor programmed to execute each function by software like a processor implemented by an electronic circuit, and a device such as an application-specific integrated circuit (ASIC), a digital signal processor (DSP), a field-programmable gate array (FPGA), or a conventional circuit module designed to execute each function described above.

Embodiments of the present disclosure provide significant improvements in computer capabilities and functionalities. These improvements allow a user to utilize computers that provide more efficient and robust interaction with tables, which are a way to store and present information in information processing apparatuses. Embodiments of the present disclosures provide a better user experience through the use of a more efficient, powerful, and robust user interface. Such a user interface provides a better interaction between a human and a machine.

## Claims

1. A conference system (300) comprising:
a terminal device (4, 11, 14) operated by a participant in a conference;
a conference terminal device (2) being an electronic device used in the conference; and
an conference server (1) configured to communicate with the terminal device (4, 11, 14) and the conference terminal device (2) via a network,
the terminal device (4,11,14) including a second participation request transmission unit (41) configured to transmit a participation request for requesting the conference terminal device (2) to participate in the conference to the conference server (1) in response to an operation of the participant, and
the conference server (1) including a first participation request transmission unit (26) configured to transmit the participation request for requesting the conference terminal device (2) to participate, received from the terminal device (4,11,14), to the conference terminal device (2),
wherein the conference terminal device (2) further includes a conference participation state transmission unit (78) configured to transmit a conference participation state indicating whether the conference terminal device (2) can participate in the conference to the conference server (1),
wherein the conference server (1) further includes a conference participation state receiving unit (25) configured to receive the conference participation state from the conference terminal device (2),
wherein the first participation request transmission unit (26) is configured to transmit the participation request for requesting the conference terminal device (2) to participate, received from the terminal device (4,11,14), to the conference terminal device (2) based on the conference participation state received by the conference participation state receiving unit (25),
wherein the conference participation state receiving unit (25) is configured to receive first identification information that changes at regular time intervals together with the conference participation state from the conference terminal device (2),
wherein the second participation request transmission unit (41) is configured to transmit second identification information input by the participant to the conference server (1), and
wherein the first participation request transmission unit (26) is configured to transmit the participation request to the conference terminal device (2) when the conference participation state of the conference terminal device (2) is online, and the first identification information and the second identification information match.

2. The conference system (300) according to claim 1, wherein the conference server (1) further includes a participation registration unit (28) configured to register a state indicating that the conference terminal device (2) has participated in the conference when a response to the participation request is received from the conference terminal device (2).

3. The conference system (300) according to claim 1 or 2,
wherein the first participation request transmission unit (26) is configured to transmit the participation request to the conference terminal device (2) when the conference participation state of the conference terminal device (2) indicates online.

4. The conference system (300) according to any one of claims 1 to 3,
wherein the first participation request transmission unit (26) is configured not to transmit the participation request to the conference terminal device (2) when the conference participation state of the conference terminal device (2) indicates participation in another conference or offline, and transmits a failure of the participation request to the terminal device (4,11,14).

5. The conference system (300) according to any one of claims 1 to 4,
wherein the conference server (1) is configured to transmit a failure of the participation request to the terminal device (4,11,14) when the first identification information and the second identification information do not match.

6. The conference system (300) according to any one of claims 1 to 5,
wherein the second participation request transmission unit (41) is configured to transmit the participation request to the conference server (1) together with information indicating that the participant participates in the conference.

7. The conference system (300) according to any one of claims 1 to 5,
wherein the terminal device (4,11,14) further includes an operation reception unit (43) configured to receive a transmission instruction of the participation request via a participant list screen of participants participating in the conference, and
wherein the second participation request transmission unit (41) is configured to transmit the participation request to the conference server (1) when the operation reception unit (43) receives the transmission instruction of the participation request.

8. The conference system (300) according to claim 6 or 7,
wherein the conference server (1) is configured to transmit screen information based on the conference participation state of the conference terminal device (2) to the terminal device (4,11,14), and
wherein the terminal device (4,11,14) is configured to restrict reception of the transmission instruction of the participation request based on the screen information when the conference participation state indicates participation in another conference or offline.

9. The conference system (300) according to claim 6 or 7,
wherein the conference server (1) further includes a user authentication unit (30) configured to authenticate the participant,
wherein the conference server (1) is configured to transmit screen information to the terminal device (4,11,14), based on the information indicating that the participant authenticated by the user authentication unit (30) is a guest user, and
wherein the terminal device (4,11,14) is configured to restrict reception of the transmission instruction of the participation request based on the screen information when the terminal device (4,11,14) receives the information indicating that the participant is a guest user.

10. The conference system (300) according to any one of claims 1 to 9,
wherein the second participation request transmission unit (41) is configured to transmit a cancellation request of the participation request to the conference server (1) in response to a user operation after the transmission of the participation request, and
wherein the first participation request transmission unit (26) is configured to continue to transmit the cancellation request of the participation request to the conference terminal device (2) until the conference participation state receiving unit (25) receives the conference participation state indicating participation in another conference from the conference terminal device (2).

11. The conference system (300) according to any one of claims 1 to 10,
wherein, when the conference terminal device (2) receives the participation request,
the conference terminal device (2) is configured to display information indicating that the conference terminal device (2) participates in the conference and receives the cancellation request of participation in the conference for a predetermined time.

12. The conference system (300) according to any one of claims 1 to 11,
wherein the terminal device (4,11,14) further includes a second exit request transmission unit (47) configured to transmit an exit request for causing the conference terminal device (2) to exit from the conference to the conference server (1) in response to an operation of the participant,
wherein the conference server (1) further includes a first exit request transmission unit (27) configured to transmit the exit request received from the terminal device (4,11,14) to the conference terminal device (2), and
wherein the participation registration unit (28) is configured to delete the information indicating the participation in the conference when the conference participation state receiving unit (25) receives the conference participation state indicating online from the conference terminal device (2).

13. A participation method executed by a conference system (300) including a terminal device (4, 11, 14) operated by a participant in a conference, a conference terminal device (2), and an conference server (1) configured to communicate with one another via a network, the method comprising:
transmitting (S17, S32), from the terminal device (4,11,14), a participation request for requesting the conference terminal device (2) to participate in the conference to the conference server (1) in response to an operation of the participant;
transmitting (S18, S37) from the conference server (1), the participation request for requesting the conference terminal device (2) to participate, received from the terminal device (4,11,14) to the conference terminal device (2);
transmitting, from the conference terminal device (2), a conference participation state indicating whether the conference terminal device (2) can participate in the conference to the conference server (1),
receiving, by the conference server (1), the conference participation state from the conference terminal device (2),
transmitting, from the conference server (1), the participation request for requesting the conference terminal device (2) to participate, received from the terminal device (4,11,14), to the conference terminal device (2) based on the conference participation state received,
receiving, by the conference server (1), first identification information that changes at regular time intervals together with the conference participation state from the conference terminal device (2),
transmitting, from the terminal device (4,11,14), second identification information input by the participant to the conference server (1), and
transmitting, from the conference server (1), the participation request to the conference terminal device (2) when the conference participation state of the conference terminal device (2) is online, and the first identification information and the second identification information match.

## Patentansprüche

1. Konferenzsystem (300), umfassend:
ein Endgerät (4, 11, 14), das von einem Teilnehmer einer Konferenz bedient wird;
ein Konferenzendgerät (2), das ein in der Konferenz verwendetes elektronisches Gerät ist; und
einen Konferenzserver (1), der so konfiguriert ist, dass er über ein Netzwerk mit dem Endgerät (4, 11, 14) und dem Konferenzendgerät (2) kommuniziert,
wobei das Endgerät (4, 11, 14) eine zweite Teilnahmeanforderungsübertragungseinheit (41) umfasst, die so konfiguriert ist, dass sie eine Teilnahmeanforderung, mit der das Konferenzendgerät (2) zur Teilnahme an der Konferenz aufgefordert wird, als Reaktion auf eine Bedienung durch den Teilnehmer an den Konferenzserver (1) überträgt, und
wobei das Konferenzservergerät (1) eine erste Teilnahmeanforderungsübertragungseinheit (26) umfasst, die so konfiguriert ist, dass sie die vom Endgerät (4, 11, 14) empfangene Teilnahmeanforderung, mit der das Konferenzendgerät (2) zur Teilnahme aufgefordert wird, an das Konferenzendgerät (2) überträgt,
wobei das Konferenzendgerät (2) ferner eine Konferenzteilnahmestatus-Übertragungseinheit (78) umfasst, die so konfiguriert ist, dass sie einen Konferenzteilnahmestatus, der angibt, ob das Konferenzendgerät (2) an der Konferenz teilnehmen kann, an den Konferenzserver (1) überträgt,
wobei der Konferenzserver (1) ferner eine KonferenzteilnahmestatusEmpfangseinheit (25) umfasst, die so konfiguriert ist, dass sie den Konferenzteilnahmestatus vom Konferenzendgerät (2) empfängt,
wobei die erste Teilnahmeanforderungsübertragungseinheit (26) so konfiguriert ist, dass sie die vom Endgerät (4, 11, 14) empfangene Teilnahmeanforderung, mit der das Konferenzendgerät (2) zur Teilnahme aufgefordert wird, auf der Grundlage des von der Konferenzteilnahmestatusempfangseinheit (25) empfangenen Konferenzteilnahmestatus an das Konferenzendgerät (2) überträgt,
wobei die Konferenzteilnahmestatusempfangseinheit (25) so konfiguriert ist, dass sie erste Identifikationsinformationen, die sich in regelmäßigen Zeitintervallen ändern, zusammen mit dem Konferenzteilnahmestatus vom Konferenzendgerät (2) empfängt,
wobei die zweite Teilnahmeanforderungsübertragungseinheit (41) so konfiguriert ist, dass sie zweite Identifikationsinformationen, die vom Teilnehmer eingegeben wurden, an den Konferenzserver (1) überträgt, und
wobei die erste Teilnahmeanforderungsübertragungseinheit (26) so konfiguriert ist, dass sie die Teilnahmeanforderung an das Konferenzendgerät (2) überträgt, wenn der Konferenzteilnahmestatus des Konferenzendgeräts (2) online ist und die ersten Identifikationsinformationen und die zweiten Identifikationsinformationen übereinstimmen.

2. Konferenzsystem (300) nach Anspruch 1, wobei der Konferenzserver (1) ferner eine Teilnahmeregistrierungseinheit (28) umfasst, die so konfiguriert ist, dass sie einen Status registriert, der angibt, dass das Konferenzendgerät (2) an der Konferenz teilgenommen hat, wenn eine Antwort auf die Teilnahmeanforderung vom Konferenzendgerät (2) empfangen wird.

3. Konferenzsystem (300) nach Anspruch 1 oder 2,
wobei die erste Teilnahmeanforderungsübertragungseinheit (26) so konfiguriert ist, dass sie die Teilnahmeanforderung an das Konferenzendgerät (2) überträgt, wenn der Konferenzteilnahmestatus des Konferenzendgeräts (2) "online" anzeigt.

4. Konferenzsystem (300) gemäß einem der Ansprüche 1 bis 3,
wobei die erste Teilnahmeanforderungsübertragungseinheit (26) so konfiguriert ist, dass sie die Teilnahmeanforderung nicht an das Konferenzendgerät (2) überträgt, wenn der Konferenzteilnahmestatus des Konferenzendgeräts (2) die Teilnahme an einer anderen Konferenz oder den Offline-Status anzeigt, und eine Fehlermeldung bezüglich der Teilnahmeanforderung an das Endgerät (4, 11, 14) überträgt.

5. Konferenzsystem (300) nach einem der Ansprüche 1 bis 4,
wobei der Konferenzserver (1) so konfiguriert ist, dass er einen Fehler der Teilnahmeanforderung an das Endgerät (4, 11, 14) überträgt, wenn die ersten Identifikationsinformationen und die zweiten Identifikationsinformationen nicht übereinstimmen.

6. Konferenzsystem (300) gemäß einem der Ansprüche 1 bis 5,
wobei die zweite Teilnahmeanforderungsübertragungseinheit (41) so konfiguriert ist, dass sie die Teilnahmeanforderung zusammen mit Informationen, die angeben, dass der Teilnehmer an der Konferenz teilnimmt, an den Konferenzserver (1) überträgt.

7. Konferenzsystem (300) gemäß einem der Ansprüche 1 bis 5,
wobei das Endgerät (4, 11, 14) ferner eine Betriebsempfangseinheit (43) umfasst, die so konfiguriert ist, dass sie eine Übertragungsanweisung der Teilnahmeanforderung über einen Teilnehmerlistenbildschirm der an der Konferenz teilnehmenden Teilnehmer empfängt, und
wobei die zweite Teilnahmeanforderungsübertragungseinheit (41) so konfiguriert ist, dass sie die Teilnahmeanforderung an den Konferenzserver (1) überträgt, wenn die Bedienungsempfangseinheit (43) die Übertragungsanweisung der Teilnahmeanforderung empfängt.

8. Konferenzsystem (300) gemäß Anspruch 6 oder 7,
wobei der Konferenzserver (1) so konfiguriert ist, dass er Bildschirminformationen basierend auf dem Konferenzteilnahmestatus des Konferenzendgeräts (2) an das Endgerät (4, 11, 14) überträgt, und
wobei das Endgerät (4, 11, 14) so konfiguriert ist, dass es den Empfang der Übertragungsanweisung der Teilnahmeanforderung auf der Grundlage der Bildschirminformationen einschränkt, wenn der Konferenzteilnahmestatus die Teilnahme an einer anderen Konferenz oder den Offline-Status anzeigt.

9. Konferenzsystem (300) gemäß Anspruch 6 oder 7,
wobei der Konferenzserver (1) ferner eine Benutzerauthentifizierungseinheit (30) umfasst, die so konfiguriert ist, dass sie den Teilnehmer authentifiziert,
wobei der Konferenzserver (1) so konfiguriert ist, dass er Bildschirminformationen an das Endgerät (4, 11, 14) überträgt, basierend auf den Informationen, die anzeigen, dass der von der Benutzerauthentifizierungseinheit (30) authentifizierte Teilnehmer ein Gastbenutzer ist, und
wobei das Endgerät (4, 11, 14) so konfiguriert ist, dass es den Empfang der Übertragungsanweisung der Teilnahmeanforderung auf der Grundlage der Bildschirminformationen einschränkt, wenn das Endgerät (4, 11, 14) die Information empfängt, die angibt, dass der Teilnehmer ein Gastbenutzer ist.

10. Konferenzsystem (300) gemäß einem der Ansprüche 1 bis 9,
wobei die zweite Teilnahmeanforderungsübertragungseinheit (41) so konfiguriert ist, dass sie eine Stornierungsanforderung der Teilnahmeanforderung an den Konferenzserver (1) als Reaktion auf eine Benutzeroperation nach der Übertragung der Teilnahmeanforderung überträgt, und
wobei die erste Teilnahmeanforderungsübertragungseinheit (26) so konfiguriert ist, dass sie die Stornierungsanforderung der Teilnahmeanforderung an das Konferenzendgeräte (2) so lange weiter überträgt, bis die Konferenzteilnahmestatusempfangseinheit (25) den Konferenzteilnahmestatus, der die Teilnahme an einer anderen Konferenz anzeigt, vom Konferenzendgerät (2) empfängt.

11. Konferenzsystem (300) gemäß einem der Ansprüche 1 bis 10,
wobei, wenn das Konferenzendgerät (2) die Teilnahmeanforderung empfängt,
das Konferenzendgerät (2) so konfiguriert ist, dass es Informationen anzeigt, die darauf hinweisen, dass das Konferenzendgerät (2) an der Konferenz teilnimmt, und die Stornierungsanforderung der Teilnahme an der Konferenz für eine vorbestimmte Zeit empfängt.

12. Konferenzsystem (300) gemäß einem der Ansprüche 1 bis 11,
wobei das Endgerät (4, 11, 14) ferner eine zweite Austrittsanforderungs-Übertragungseinheit (47) umfasst, die so konfiguriert ist, dass sie eine Austrittsanforderung, die bewirkt, dass das Konferenzendgerät (2) aus der Konferenz austritt, als Reaktion auf eine Operation des Teilnehmers an den Konferenzserver (1) überträgt,
wobei der Konferenzserver (1) ferner eine erste Beendigungsanforderungs-Übertragungseinheit (27) umfasst, die so konfiguriert ist, dass sie die von dem Endgerät (4, 11, 14) empfangene Beendigungsanforderung an das Konferenzendgerät (2) überträgt, und
wobei die Teilnahmeregistrierungseinheit (28) so konfiguriert ist, dass sie die Informationen, die die Teilnahme an der Konferenz anzeigen, löscht, wenn die Konferenzteilnahmezustands-Empfangseinheit (25) den Konferenzteilnahmezustand, der "online" anzeigt, vom Konferenzendgerät (2) empfängt.

13. Teilnahmeverfahren, das von einem Konferenzsystem (300) ausgeführt wird, das ein von einem Konferenzteilnehmer bedientes Endgerät (4, 11, 14), ein Konferenzendgerät (2) und einen Konferenzserver (1) umfasst, die so konfiguriert sind, dass sie über ein Netzwerk miteinander kommunizieren, wobei das Verfahren umfasst:
Senden (S17, S32) einer Teilnahmeanforderung vom Endgerät (4, 11, 14) an den Konferenzserver (1), um das Konferenzendgerät (2) zur Teilnahme an der Konferenz aufzufordern, als Reaktion auf eine Bedienung durch den Teilnehmer;
Senden (S18, S37) der Teilnahmeanforderung, mit der das Konferenzendgerät (2) zur Teilnahme aufgefordert wird, vom Konferenzserver (1) an das Konferenzendgerät (2), die vom Endgerät (4, 11, 14) empfangen wurde;
Übertragen eines Konferenzteilnahmestatus, der angibt, ob das Konferenzendgerät (2) an der Konferenz teilnehmen kann, vom Konferenzendgerät (2) an den Konferenzserver (1);
Empfangen des Konferenzteilnahmestatus vom Konferenzendgerät (2) durch den Konferenzserver (1);
Senden der Teilnahmeanforderung, mit der das Konferenzendgerät (2) zur Teilnahme aufgefordert wird, vom Konferenzserver (1) an das Konferenzendgerät (2) auf der Grundlage des empfangenen Konferenzteilnahmestatus;
Empfangen einer ersten Identifikationsinformation, die sich in regelmäßigen Zeitintervallen ändert, zusammen mit dem Konferenzteilnahmestatus vom Konferenzendgerät (2) durch den Konferenzserver (1);
Senden der vom Teilnehmer eingegebenen zweiten Identifikationsinformationen vom Endgerät (4, 11, 14) an den Konferenzserver (1); und
Senden der Teilnahmeanforderung vom Konferenzserver (1) an das Konferenzendgerät (2), wenn der Konferenzteilnahmestatus des Konferenzendgeräts (2) online ist und die ersten Identifikationsinformationen und die zweiten Identifikationsinformationen übereinstimmen.

## Revendications

1. Système de conférence (300) comprenant :
un dispositif terminal (4, 11, 14) mis en fonctionnement par un participant à une conférence ;
un dispositif terminal de conférence (2) qui est un dispositif électronique utilisé pendant la conférence ; et
un serveur de conférence (1) configuré pour communiquer avec le dispositif terminal (4, 11, 14) et le dispositif terminal de conférence (2) par l'intermédiaire d'un réseau,
le dispositif terminal (4, 11, 14) incluant une deuxième unité de transmission de demande de participation (41) configurée pour transmettre une demande de participation afin de demander au dispositif terminal de conférence (2) de participer à la conférence au serveur de conférence (1) en réponse à une opération du participant, et
le serveur de conférence (1) incluant une première unité de transmission de demande de participation (26) configurée pour transmettre la demande de participation pour demander au dispositif terminal de conférence (2) de participer, reçue à partir du dispositif terminal (4, 11, 14), au dispositif terminal de conférence (2),
dans lequel le dispositif terminal de conférence (2) inclut en outre une unité de transmission d'état de participation à la conférence (78) configurée pour transmettre un état de participation à la conférence indiquant si le dispositif terminal de conférence (2) peut participer à la conférence au serveur de conférence (1),
dans lequel le serveur de conférence (1) inclut en outre une unité de réception d'état de participation à la conférence (25) configurée pour recevoir l'état de participation à la conférence à partir du dispositif terminal de conférence (2),
dans lequel la première unité de transmission de demande de participation (26) est configurée pour transmettre la demande de participation pour demander au dispositif terminal de conférence (2) de participer, reçue à partir du dispositif terminal (4, 11, 14), au dispositif terminal de conférence (2) sur la base de l'état de participation à la conférence reçu par l'unité de réception d'état de participation à la conférence (25),
dans lequel l'unité de réception d'état de participation à la conférence (25) est configurée pour recevoir des premières informations d'identification qui changent à des intervalles de temps réguliers conjointement avec l'état de participation à la conférence à partir du dispositif terminal de conférence (2),
dans lequel la deuxième unité de transmission de demande de participation (41) est configurée pour transmettre des deuxièmes informations d'identification fournies en entrée par le participant au serveur de conférence (1), et
dans lequel la première unité de transmission de demande de participation (26) est configurée pour transmettre la demande de participation au dispositif terminal de conférence (2) lorsque l'état de participation à la conférence du dispositif terminal de conférence (2) est en ligne, et les premières informations d'identification et les deuxièmes informations d'identification concordent.

2. Système de conférence (300) selon la revendication 1, dans lequel le serveur de conférence (1) inclut en outre une unité d'enregistrement de participation (28) configurée pour enregistrer un état indiquant que le dispositif terminal de conférence (2) a participé à la conférence lorsqu'une réponse à la demande de participation est reçue à partir du dispositif terminal de conférence (2).

3. Système de conférence (300) selon la revendication 1 ou 2,
dans lequel la première unité de transmission de demande de participation (26) est configurée pour transmettre la demande de participation au dispositif terminal de conférence (2) lorsque l'état de participation à la conférence du dispositif terminal de conférence (2) indique en ligne.

4. Système de conférence (300) selon l'une quelconque des revendications 1 à 3,
dans lequel la première unité de transmission de demande de participation (26) est configurée pour ne pas transmettre la demande de participation au dispositif terminal de conférence (2) lorsque l'état de participation à la conférence du dispositif terminal de conférence (2) indique une participation à une autre conférence ou hors ligne, et transmet un échec de la demande de participation au dispositif terminal (4, 11, 14).

5. Système de conférence (300) selon l'une quelconque des revendications 1 à 4,
dans lequel le serveur de conférence (1) est configuré pour transmettre un échec de la demande de participation au dispositif terminal (4, 11, 14) lorsque les premières informations d'identification et les deuxièmes informations d'identification ne concordent pas.

6. Système de conférence (300) selon l'une quelconque des revendications 1 à 5,
dans lequel la deuxième unité de transmission de demande de participation (41) est configurée pour transmettre la demande de participation au serveur de conférence (1) conjointement avec des informations indiquant que le participant participe à la conférence.

7. Système de conférence (300) selon l'une quelconque des revendications 1 à 5,
dans lequel le dispositif terminal (4, 11, 14) inclut en outre une unité de réception d'opération (43) configurée pour recevoir une instruction de transmission de la demande de participation par l'intermédiaire d'un écran de liste de participants participant à la conférence, et
dans lequel la deuxième unité de transmission de demande de participation (41) est configurée pour transmettre la demande de participation au serveur de conférence (1) lorsque l'unité de réception d'opération (43) reçoit l'instruction de transmission de la demande de participation.

8. Système de conférence (300) selon la revendication 6 ou 7,
dans lequel le serveur de conférence (1) est configuré pour transmettre des informations d'écran sur la base de l'état de participation à la conférence du dispositif terminal de conférence (2) au dispositif terminal (4, 11, 14), et
dans lequel le dispositif terminal (4, 11, 14) est configuré pour empêcher une réception de l'instruction de transmission de la demande de participation sur la base des informations d'écran lorsque l'état de participation à la conférence indique une participation à une autre conférence ou hors ligne.

9. Système de conférence (300) selon la revendication 6 ou 7,
dans lequel le serveur de conférence (1) inclut en outre une unité d'authentification d'utilisateur (30) configurée pour authentifier le participant,
dans lequel le serveur de conférence (1) est configuré pour transmettre des informations d'écran au dispositif terminal (4, 11, 14), sur la base des informations indiquant que le participant authentifié par l'unité d'authentification d'utilisateur (30) est un utilisateur invité, et
dans lequel le dispositif terminal (4, 11, 14) est configuré pour empêcher une réception de l'instruction de transmission de la demande de participation sur la base des informations d'écran lorsque le dispositif terminal (4, 11, 14) reçoit les informations indiquant que le participant est un utilisateur invité.

10. Système de conférence (300) selon l'une quelconque des revendications 1 à 9,
dans lequel la deuxième unité de transmission de demande de participation (41) est configurée pour transmettre une demande d'annulation de la demande de participation au serveur de conférence (1) en réponse à une opération d'utilisateur après la transmission de la demande de participation, et
dans lequel la première unité de transmission de demande de participation (26) est configurée pour continuer à transmettre la demande d'annulation de la demande de participation au dispositif terminal de conférence (2) jusqu'à ce que l'unité de réception d'état de participation à la conférence (25) reçoive l'état de participation à la conférence indiquant une participation à une autre conférence à partir du dispositif terminal de conférence (2).

11. Système de conférence (300) selon l'une quelconque des revendications 1 à 10,
dans lequel, lorsque le dispositif terminal de conférence (2) reçoit la demande de participation,
le dispositif terminal de conférence (2) est configuré pour afficher des informations indiquant que le dispositif terminal de conférence (2) participe à la conférence et reçoit la demande d'annulation de participation à la conférence pendant un temps prédéterminé.

12. Système de conférence (300) selon l'une quelconque des revendications 1 à 11,
dans lequel le dispositif terminal (4, 11, 14) inclut en outre une deuxième unité de transmission de demande de sortie (47) configurée pour transmettre une demande de sortie afin d'amener le dispositif terminal de conférence (2) à sortir de la conférence au serveur de conférence (1) en réponse à une opération du participant,
dans lequel le serveur de conférence (1) inclut en outre une première unité de transmission de demande de sortie (27) configurée pour transmettre la demande de sortie reçue à partir du dispositif terminal (4, 11, 14), au dispositif terminal de conférence (2), et
dans lequel l'unité d'enregistrement de participation (28) est configurée pour supprimer les informations indiquant la participation à la conférence lorsque l'unité de réception d'état de participation à la conférence (25) reçoit l'état de participation à la conférence indiquant en ligne à partir du dispositif terminal de conférence (2).

13. Procédé de participation exécuté par un système de conférence (300) incluant un dispositif terminal (4, 11, 14) mis en fonctionnement par un participant à une conférence, un dispositif terminal de conférence (2), et un serveur de conférence (1) configurés pour communiquer les uns avec les autres par l'intermédiaire d'un réseau, le procédé comprenant :
la transmission (S17, S32), à partir du dispositif terminal (4, 11, 14), d'une demande de participation pour demander au dispositif terminal de conférence (2) de participer à la conférence au serveur de conférence (1) en réponse à une opération du participant ;
la transmission (S18, S37), à partir du serveur de conférence (1), de la demande de participation pour demander au dispositif terminal de conférence (2) de participer, reçue à partir du dispositif terminal (4, 11, 14), au dispositif terminal de conférence (2) ;
la transmission, à partir du dispositif terminal de conférence (2), d'un état de participation à la conférence indiquant si le dispositif terminal de conférence (2) peut participer à la conférence au serveur de conférence (1),
la réception, par le serveur de conférence (1), de l'état de participation à la conférence à partir du dispositif terminal de conférence (2),
la transmission, à partir du serveur de conférence (1), de la demande de participation pour demander au dispositif terminal de conférence (2) de participer, reçue à partir du dispositif terminal (4, 11, 14), au dispositif terminal de conférence (2) sur la base de l'état de participation à la conférence reçu,
la réception, par le serveur de conférence (1), de premières informations d'identification qui changent à des intervalles de temps réguliers conjointement avec l'état de participation à la conférence à partir du dispositif terminal de conférence (2),
la transmission, à partir du dispositif terminal (4, 11, 14), de deuxièmes informations d'identification fournies en entrée par le participant au serveur de conférence (1), et
la transmission, à partir du serveur de conférence (1), de la demande de participation au dispositif terminal de conférence (2) lorsque l'état de participation à la conférence du dispositif terminal de conférence (2) est en ligne, et les premières informations d'identification et les deuxièmes informations d'identification concordent.
